# EUROPEAN PATENT SPECIFICATION

(11) **EP 4 419 279 B1**
(45) Date of publication and mention of the grant of the patent: **10.12.2025**
(21) Application number: 22799935.6
(22) Date of filing: 06.10.2022
(51) Int. Cl.: B23C 5/24, G05B 19/4093, G05B 19/401

(54) **A SYSTEM AND A METHOD FOR DETERMINING A SETTING OF A CUTTING TOOL**
SYSTEM UND VERFAHREN ZUR BESTIMMUNG DER EINSTELLUNG EINES SCHNEIDWERKZEUGS
SYSTÈME ET PROCÉDÉ PERMETTANT DE DÉTERMINER UN PARAMÈTRE D'UN OUTIL DE COUPE

(30) Priority: 22.10.2021 EP 21204269
(43) Date of publication of application: 28.08.2024
(73) Proprietor: Seco Tools AB, 737 82 Fagersta (SE)
(72) Inventor: KOPP-CHTARQUE, Frederic, 737 82 Fagersta (SE)
(74) Representative: Sandvik
(86) International application number: PCT/EP2022/077756
(87) International publication number: WO 2023/066668

(56) References cited:
- EP-B1- 0 781 184
- EP-B1- 3 062 959
- US-A- 4 400 118
- US-A- 4 451 185
- US-A- 4 933 868

## Description

### TECHNICAL FIELD

The present invention relates to a system and a method for determining a setting of a cutting tool.

### BACKGROUND

Some of the cutting tools available on the market today have the possibility of using different settings depending on which application they are used in. For example, it is possible to adjust the cutting diameter of the cutting tool.

However, all possible settings of the cutting tool may not be optimal for a specific operation. For example, a specific setting may introduce unwanted vibrations in the cutting tool which will affect the quality of the performed operation and also reduce the lifetime of the cutting tool.

Today, most cutting tool manufacturers provide recommendations on which tool settings should be used for a specific operation. These settings are then manually set by the operator of the cutting tool by performing manual measurements of the cutting tool. A problem with these manual measurements is that there is a high risk that an incorrect setting is made due to a wrong measurement, which will risk reducing the quality of the performed operation, and also risk reducing the lifetime of the cutting tool.

US 4 933 868 A discloses a cutting tool including a motor and control inside the cutting tool for adjusting the radius of the cutting tool. However, the accuracy in determining the setting of the cutting tool has not proven to be satisfying.

### SUMMARY OF THE INVENTION

It is an object of the present invention to overcome, or at least partially overcome, said problem by introducing a system and a method for determining a setting of a cutting tool.

The object of the present invention is achieved by means of a system for determining a setting of a cutting tool, wherein the system comprises a cutting tool comprising a first tool part having a longitudinal axis A and a second tool part, wherein the first tool part is a non-adjustable tool part, and wherein the second tool part is radially and/or axially adjustable relative the first tool part, wherein the second tool part comprises a second position sensor arranged at a second position at the second tool part, and wherein the second position sensor is configured to generate second position data comprising information regarding the second position, wherein the system further comprises a processing circuitry, and a memory, wherein the memory comprises instructions executable by the processing circuitry, wherein the first tool part comprises a first position sensor arranged at a first position at the first tool part, and wherein the first position sensor is configured to generate first position data comprising information regarding the first position, wherein the processing circuitry is configured to cause the system to:
- obtain the first position data;
- obtain the second position data;
- determine the first position based on the first position data;
- determine the second position based on the second position data;
- determine a distance and a direction between the first position and the second position at based on the first position and the second position;
- determine a geometrical shape of the first tool part;
- determine a geometrical shape of the second tool part;
- determine a relation between the first position and the geometrical shape of the first tool part that comprises information regarding where at the first tool part the first position is located;
- determine a relation between the second position and the geometrical shape of the second tool part that comprises information regarding where at the second tool part the second position is located; and
- determine a setting of the cutting tool based at least on:
   - the determined distance and direction between the first position and the second position,
   - the determined relation between the first position and the geometrical shape of the first tool part, and
   - the determined relation between the second position and the geometrical shape of the second tool part.

By providing a first position sensor at a first position at the first tool part and a second position sensor at a second position at the second tool part, which are configured to generate first and second position data comprising information regarding the first and second positions it is possible to determine a distance and direction between the first and second positions. By also determining a relation between the first position and the geometrical shape of the first tool part that comprises information regarding where at the first tool part the first position is located, and a relation between the second position and the geometrical shape of the second tool part that comprises information regarding where at the second tool part the second position is located, it is possible to determine how the second tool part is arranged relative the first tool part. Since the first tool part is a non-adjustable tool part, the first position will be a fixed reference position, which results in that the setting of the cutting tool can be determined with a high degree of certainty. Since the system is configured to automatically determine the setting of the cutting tool, the risk of using an incorrect setting of the cutting tool in an operation is decreased, and the risk of a low quality of the performed operation and the risk of reduced lifetime of the cutting tool are thereby reduced.

The first and second position sensors are any suitable type of commercially available sensors configured to generate position data comprising information regarding their position.

The geometrical shape of the first tool part is defined as the three-dimensional shape of the first tool part.

The geometrical shape of the second tool part is defined as the three-dimensional shape of the second tool part.

The setting of the cutting tool is defined as how the adjustable tool part is arranged relative the non-adjustable tool part.

The cutting tool is preferably a metal cutting tool, such as a milling tool, a turning tool, a boring tool, a drilling tool, and/or a reaming tool.

The memory and the processing circuitry are preferably arranged in an electronic unit, for example a computer or a smartphone.

According to an embodiment, the electronic unit is an electronic circuit arranged at the cutting tool.

According to an embodiment, the system further comprises a user interface, and wherein the processing circuitry is further configured to cause the system to present the determined setting of the cutting tool at the user interface. The user interface is preferably a display.

By presenting the setting of the cutting tool at the user interface, the operator can confirm that the cutting tool is arranged according to the desired setting.

According to an embodiment, the first tool part and the second tool part are non-exchangeable tool parts, wherein the cutting tool comprises an identification marker, wherein the identification marker is a machine readable code comprising cutting tool identification data, wherein the system further comprises a reading device configured to read the identification marker, wherein the processing circuitry is further configured to cause the system to:
- read, by the reading device, the identification marker;
- determine the cutting tool identification data by decoding the machine readable code;
- determine a cutting tool information based on the cutting tool identification data, wherein the cutting tool information comprises information regarding:
   - the geometrical shape of the first tool part,
   - the geometrical shape of the second tool part,
   - the relation between the first position and the geometrical shape of the first tool part, and
   - the relation between the second position and the geometrical shape of the second tool part;
wherein the geometrical shape of the first tool part, the geometrical shape of the second tool part, the relation between the first position and the geometrical shape of the first tool part, and the relation between the second position and the geometrical shape of the second tool part are determined based on the cutting tool information.

By providing the cutting tool with an identification marker, the system is able to retrieve cutting tool information, either encoded in the identification marker itself or stored in an external database and associated with the cutting tool identification data. Since the cutting tool information comprises information regarding the geometrical shape of the first tool part, the geometrical shape of the second tool part, the relation between the first position and the geometrical shape of the first tool part, and the relation between the second position and the geometrical shape of the second tool part, this information can be determined by the system and used in the determination of the setting of the cutting tool.

The identification marker can be e.g. a Quick Response code, a High Capacity Colored Two Dimensional Code, a European Article Number code, a DataMatrix code, a Radio frequency identification (RFID) code, or a MaxiCode.

The reading device is any type of suitable device for reading the identification marker, e.g. an optical reader such as a camera, or an RFID-reader.

According to an embodiment, the first tool part comprises a first identification marker, and wherein the second tool part comprises a second identification marker, wherein the first identification marker is a first machine readable code comprising first tool part identification data, and wherein the second identification marker is a second machine readable code comprising second tool part identification data, wherein the system further comprises a reading device configured to read the first and second identification markers, wherein the processing circuitry is further configured to cause the system to:
- read, by the reading device, the first and second identification markers;
- determine the first tool part identification data by decoding the first machine readable code;
- determine the second tool part identification data by decoding the second machine readable code;
- determine a first tool part information based on the first tool part identification data, wherein the first tool part information comprises information regarding:
   - the geometrical shape of the first tool part, and
   - the relation between the first position and the geometrical shape of the first tool part;
- determine a second tool part information based on the second tool part identification data, wherein the second tool part information comprises information regarding:
   - the geometrical shape of the second tool part, and
   - the relation between the second position and the geometrical shape of the second tool part;
wherein the geometrical shape of the first tool part, and the relation between the first position and the geometrical shape of the first tool part are determined based on the first tool part information; and wherein the geometrical shape of the second tool part, and the relation between the second position and the geometrical shape of the second tool part are determined based on the second tool part information.

By providing the first tool part and the second tool part with a respective identification marker, the system is able to retrieve first tool part information and second tool part information, either encoded in the identification markers itself or stored in an external database and associated with the first and second tool part identification data. Since the first and second tool part information comprises information regarding the geometrical shape of the first tool part, the geometrical shape of the second tool part, the relation between the first position and the geometrical shape of the first tool part, and the relation between the second position and the geometrical shape of the second tool part, this information can be determined by the system and used in the determination of the setting of the cutting tool.

The identification marker can be e.g. a Quick Response code, a High Capacity Colored Two Dimensional Code, a European Article Number code, a DataMatrix code, a Radio frequency identification (RFID) code, or a MaxiCode.

The reading device is any type of suitable device for reading the identification marker, e.g. an optical reader such as a camera, or an RFID-reader.

According to an embodiment, the system further comprises an imaging device, wherein the processing circuitry is further configured to cause the system to:
- take an image, by the imaging device, of the first tool part with the first position sensor arranged thereon;
- take an image, by the imaging device, of the second tool part with the second position sensor arranged thereon;
wherein the geometrical shape of the first tool part, and the relation between the first position and the geometrical shape of the first tool part are determined by performing image analysis of the taken image of the first tool part with the first position sensor arranged thereon; and wherein the geometrical shape of the second tool part, and the relation between the second position and the geometrical shape of the second tool part are determined by performing image analysis of the taken image of the second tool part with the second position sensor arranged thereon.

By taking an image of the first tool part with the first position sensor arranged thereon and by taking an image of the second tool part with the second position sensor arranged thereon, and subsequently performing image analysis, the system can determine the geometrical shape of the first tool part, the geometrical shape of the second tool part, the relation between the first position and the geometrical shape of the first tool part, and the relation between the second position and the geometrical shape of the second tool part. This information is then used to determine the setting of the cutting tool.

The imaging device being any type of device being configured to take an image, e.g. a camera.

According to an embodiment, the imaging device is configured to take an image comprising both the first tool part with the first position sensor arranged thereon, and the second tool part with the second position sensor arranged thereon.

According to an embodiment, a combination of identification markers and image analysis can be used to determine the geometrical shape of the first tool part, the geometrical shape of the second tool part, the relation between the first position and the geometrical shape of the first tool part, and the relation between the second position and the geometrical shape of the second tool part. In this embodiment, the identification markers are preferably optical readable identification markers, and the reading device being an optical reading device configured to both taking images of the first and second tool parts and reading the optical readable identification markers.

According to an embodiment, the second tool part comprises an insert pocket configured to receive an exchangeable cutting insert.

According to an embodiment, the second tool part comprises a cutting edge, and wherein the processing circuitry is further configured to cause the system to determine a relation between the second position and the cutting edge, and to determine a position of the cutting edge relative the first position.

The relation between the second position and the cutting edge is preferably determined in the same way as the relation between the first position and the geometrical shape of the first tool part, and the relation between the second position and the geometrical shape of the second tool part according to any of the embodiments described above.

The relation between the second position and the cutting edge comprises information regarding the distance and direction between the second position and the cutting edge.

Since it is the cutting edge that is in contact with the workpiece during the cutting operation, the analysis of the quality of the performed cutting operation is facilitated by analyzing the position of the cutting edge relative the fixed reference position.

According to an embodiment, the second tool part comprises a first sub-part having a longitudinal axis B, and a second sub-part, wherein the second sub-part is radially and/or axially adjustable relative the first sub-part, wherein the second position is located at the first sub-part, and wherein the second sub part comprises a third position sensor arranged at a third position at the second sub-part, wherein the third position sensor is configured to generate third position data comprising information regarding the third position, wherein the processing circuitry is further configured to cause the system to:
- obtain the third position data;
- determine the third position based on the third position data;
- determine a distance and a direction between the first position and the third position based on the first position and the third position, and/or a distance and a direction between the second position and the third position based on the second position and the third position;
- determine a geometrical shape of the first sub-part;
- determine a geometrical shape of the second sub-part;
- determine a relation between the second position and the geometrical shape of the first sub-part that comprises information regarding where at the first sub-part the second position is located;
- determine a relation between the third position and the geometrical shape of the second sub-part that comprises information regarding where at the second sub-part the third position is located; and
- determine a setting of the cutting tool based at least on:
   - the determined relation between the first position and the geometrical shape of the first tool part,
   - the determined relation between the second position and the geometrical shape of the first sub-part,
   - the determined relation between the third position and the geometrical shape of the second sub-part;
   - the determined distance and direction between the first position and the second position at the first sub-part, and
   - the determined distance and direction between the first position and the third position and/or the determined distance and direction between the second position and the third position.

By providing the first sub-part with a position sensor at the second position and providing the second sub-part with a position sensor at the third position, a more detailed determination of the setting of the cutting tool is made.

The geometrical shape of the first sub-part is defined as the three-dimensional shape of the first sub-part.

The geometrical shape of the second sub-part is defined as the three-dimensional shape of the second sub-part.

The geometrical shape of the first sub-part, the geometrical shape of the second sub-part, the relation between the second position and the geometrical shape of the first part, and the relation between the third position and the geometrical shape of the second sub-part are preferably determined in the same way as the geometrical shape of the first tool part, and the relation between the first position and the geometrical shape of the first tool part as described above.

The third position sensor is preferably of the same type as the first and second position sensors.

According to an embodiment, the first sub-part is radially adjustable relative the first tool part, and the second sub-part is axially adjustable relative the first tool part.

By having the first sub-part being radially adjustable relative the first tool part and having the second sub-part axially adjustable relative the first tool part, a high number of possible settings of the cutting tool is available.

According to an embodiment, the cutting tool is a boring tool, and the first tool part is a shaft, the first tool part is a slider body, and the second sub-part is an insert cartridge.

According to an embodiment, the cutting tool further comprises a third tool part, wherein the third tool part being radially and/or axially adjustable relative the first tool part, and wherein the third tool part comprises a fourth position sensor arranged at a fourth position at the third tool part, wherein the fourth position sensor is configured to generate fourth position data comprising information regarding the fourth position, wherein the processing circuitry is further configured to cause the system to:
- obtain the fourth position data;
- determine the fourth position based on the fourth position data;
- determine a distance and a direction between the first position and the fourth position based on the first position and the fourth position;
- determine a geometrical shape of the third tool part;
- determine a relation between the fourth position and the geometrical shape of the third tool part that comprises information regarding where at the third tool part the fourth position is located;
- determine a setting of the cutting tool based at least on:
   - the determined distance and direction between the first position and the second position at the second tool part,
   - the determined distance and direction between the first position and the fourth position,
   - the determined relation between the first position and the geometrical shape of the first tool part,
   - the determined relation between the second position and the geometrical shape of the second tool part, and
   - the determined relation between the fourth position and the geometrical shape of the third tool part.

Since the cutting tool further is provided with a third tool part that is radially and/or axially adjustable relative the first tool part, a high number of possible settings of the cutting tool is available.

By determining a distance and a direction between the first position and the fourth position, and a relation between the fourth position and the geometrical shape of the third tool part, a more detailed determination of the setting of the cutting tool is made.

The geometrical shape of the third tool part is defined as the three-dimensional shape of the third tool part.

The geometrical shape of the third tool part, and the relation between the fourth position and the geometrical shape of the third tool part are preferably determined in the same way as the geometrical shape of the first tool part, and the relation between the first position and the geometrical shape of the first tool part as described above.

The fourth position sensor is preferably of the same type as the first and second position sensors.

According to an embodiment the processing circuitry is further configured to cause the system to determine if the second tool part and the third tool part are arranged symmetrically relative the first tool part.

The symmetry between the second and third tool parts affects the amount of vibration in the cutting tool, and in order to evaluate the performance of the cutting tool, it is preferred to know whether the second and third tools parts are symmetrically arranged or not.

The term "symmetrically arranged" is meant to represent a mirror symmetry between the second and third tool parts relative the longitudinal axis A of the first tool part.

According to an embodiment, the system further comprises a vibration measuring device, wherein the vibration measuring device is configured to generate vibration data comprising information regarding an amount of vibration in the cutting tool, wherein the processing circuitry is further configured to cause the system to:
- obtain the vibration data;
- determine the amount of vibration in the cutting tool based on the vibration data;
- determine a relation between the determined amount of vibration in the cutting tool and the determined setting of the cutting tool.

By providing the cutting tool with a vibration measurement device and determining a relation between the amount of vibration in the cutting tool and the setting of the cutting tool, it is possible to evaluate how different settings affect the amount of vibration in the cutting tool. This evaluation can be used to improve subsequent recommendations of settings for the cutting tool for a specific cutting operation.

The vibration measuring device is any type of device configured to measure vibrations, for example an accelerometer attached at the cutting tool.

The relation between the determined amount of vibration in the cutting tool and the determined setting of the cutting tool comprises information on the amount of vibration in the cutting tool that arises in a specific cutting operation with a specific setting of the cutting tool.

According to an embodiment, the cutting tool further comprises an adjustment means for adjusting the second tool part relative the first tool part, and wherein the system further comprises a user interface configured to receive a requested setting of the cutting tool, and wherein the system further comprises a control unit, wherein the processing circuitry is further configured to cause the system to:
- obtain a requested setting via the user interface;
- generate a control signal based on the requested setting; and
- control, by the control unit, the adjustment means based on the generated control signal.

By obtaining a requested setting, it is possible for the system to compare the determined setting of the cutting tool with the requested setting in order to determine what adjustments of the setting of the cutting tool that are needed in order to reach the requested setting. By generating a control signal and controlling the adjustment means based on the control signal, the setting of the cutting tool can be adjusted from a distance.

According to an embodiment, the system further comprises a database, and wherein the processing circuitry is further configured to cause the system to store the determined setting of the cutting tool in the database.

By storing the determined setting of the cutting tool in the database, it is possible to trace the history of the cutting tool usage. This can then be used to analyze the reasons for a potential low quality cutting operation or a short lifetime of the cutting tool.

The system is preferably also configured to store further information in the database, for example, information regarding the used cutting data, e.g. cutting depth, cutting feed, and cutting speed, information regarding the workpiece, and information regarding the amount of vibrations in the cutting tool. This further information is preferably associated with the determined setting of the cutting tool in the database.

According to an embodiment, the database, the memory and the processing circuitry are arranged in a common electronic unit. The electronic unit is, for example, a computer or a smartphone.

According to an embodiment, the database is an external database operatively connected to the electronic unit comprising the memory and the processing circuitry.

The object of the present invention is further achieved by a method for determining a setting of a cutting tool comprising a first tool part having a longitudinal axis A and a second tool part, wherein the first tool part is a non-adjustable tool part, and wherein the second tool part is radially and/or axially adjustable relative the first tool part, wherein the method comprises the steps of:
- obtaining a first position data comprising information regarding a first position at the first tool part;
- obtaining a second position data comprising information regarding a second position at the second tool part;
- determining the first position based on the first position data;
- determining the second position based on the second position data;
- determining a distance and a direction between the first position and the second position based on the first position and the second position;
- determining a geometrical shape of the first tool part;
- determining a geometrical shape of the second tool part;
- determining a relation between the first position and the geometrical shape of the first tool part that comprises information regarding where at the first tool part the first position is located;
- determining a relation between the second position and the geometrical shape of the second tool part that comprises information regarding where at the second tool part the second position is located; and
- determining a setting of the cutting tool based at least on:
   - the determined distance and direction between the first position and the second position at the second tool part,
   - the determined relation between the first position and the geometrical shape of the first tool part, and
   - the determined relation between the second position and the geometrical shape of the second tool part.

By obtaining a first position data comprising information regarding a first position at the first tool part and a second position data comprising information regarding a second position at the second tool part it is possible to determine a distance and direction between the first and second positions. By also determining a relation between the first position and the geometrical shape of the first tool part, and a relation between the second position and the geometrical shape of the second tool part, it is possible to determine how the second tool part is arranged relative the first tool part. Since the first tool part is a non-adjustable tool part, the first position will be a fixed reference position, which results in that the setting of the cutting tool can be determined with a high degree of certainty. The risk of using an incorrect setting of the cutting tool in an operation is thus decreased, and the risk of a low quality of the performed operation and the risk of reduced lifetime of the cutting tool is thereby reduced.

The first position data is preferably generated by a first position sensor arranged at the first position and the second position data is preferably generated by a second position sensor arranged at the second position.

The geometrical shape of the first tool part is defined as the three-dimensional shape of the first tool part.

The geometrical shape of the second tool part is defined as the three-dimensional shape of the second tool part.

The setting of the cutting tool is defined as how the adjustable tool part is arranged relative the non-adjustable tool part.

According to an embodiment, the method further comprises the step of:
- presenting the determined setting of the cutting tool at a user interface.

By presenting the setting of the cutting tool at the user interface, the operator can confirm that the cutting tool is arranged according to the desired setting.

According to an embodiment, the first tool part and the second tool part are non-exchangeable tool parts, wherein the cutting tool comprises an identification marker, wherein the identification marker is a machine readable code comprising cutting tool identification data, wherein the method further comprises the steps of:
- reading the identification marker;
- determining the cutting tool identification data by decoding the machine readable code;
- determining a cutting tool information based on the cutting tool identification data, wherein the cutting tool information comprises information regarding:
   - the geometrical shape of the first tool part,
   - the geometrical shape of the second tool part,
   - the relation between the first position and the geometrical shape of the of the first tool part, and
   - the relation between the second position and the geometrical shape of the second tool part;
wherein the geometrical shape of the first tool part, the geometrical shape of the second tool part, the relation between the first position and the geometrical shape of the first tool part, and the relation between the second position and the geometrical shape of the second tool part are determined based on the cutting tool information.

By providing the cutting tool with an identification marker, it is possible to retrieve cutting tool information, either encoded in the identification marker itself or stored in an external database and associated with the cutting tool identification data. Since the cutting tool information comprises information regarding the geometrical shape of the first tool part, the geometrical shape of the second tool part, the relation between the first position and the geometrical shape of the first tool part, and the relation between the second position and the geometrical shape of the second tool part, this information can be determined and used in the determination of the setting of the cutting tool.

The identification marker can be e.g. a Quick Response code, a High Capacity Colored Two Dimensional Code, a European Article Number code, a DataMatrix code, a Radio frequency identification (RFID) code, or a MaxiCode.

According to an embodiment, the first tool part comprises a first identification marker, and wherein the second tool part comprises a second identification marker, wherein the first identification marker is a first machine readable code comprising first tool part identification data, and wherein the second identification marker is a second machine readable code comprising second tool part identification data, wherein the method further comprises the steps of:
- reading the first and second identification markers;
- determining the first tool part identification data by decoding the first machine readable code;
- determining the second tool part identification data by decoding the second machine readable code;
- determining a first tool part information based on the first tool part identification data, wherein the first tool part information comprises information regarding:
   - the geometrical shape of the first tool part, and
   - the relation between the first position and the geometrical shape of the first tool part;
- determining a second tool part information based on the second tool part identification data, wherein the second tool part information comprises information regarding:
   - the geometrical shape of the second tool part, and
   - the relation between the second position and the geometrical shape of the second tool part; wherein

the geometrical shape of the first tool part, and the relation between the first position and the geometrical shape of the first tool part are determined based on the first tool part information; and wherein
the geometrical shape of the second tool part, and the relation between the second position and the geometrical shape of the second tool part are determined based on the second tool part information.

By providing the first tool part and the second tool part with a respective identification marker, it is possible to retrieve first tool part information and second tool part information, either encoded in the identification markers itself or stored in an external database and associated with the first and second tool part identification data. Since the first and second tool part information comprises information regarding the geometrical shape of the first tool part, the geometrical shape of the second tool part, the relation between the first position and the geometrical shape of the first tool part, and the relation between the second position and the geometrical shape of the second tool part, this information can be determined and used in the determination of the setting of the cutting tool.

The identification marker can be e.g. a Quick Response code, a High Capacity Colored Two Dimensional Code, a European Article Number code, a DataMatrix code, a Radio frequency identification (RFID) code, or a MaxiCode.

According to an embodiment, the first tool part comprises a first position sensor arranged at the first position, and wherein the second tool part comprises a second position sensor arranged at the second position, wherein the method further comprises the steps of:
- taking an image of the first tool part with the first position sensor arranged thereon;
- taking an image of the second tool part with the second position sensor arranged thereon;
wherein the geometrical shape of the first tool part, and the relation between the first position and the geometrical shape of the first tool part are determined by performing image analysis of the taken image of the first tool part with the first position sensor arranged thereon; and wherein the geometrical shape of the second tool part, and the relation between the second position part and the geometrical shape of the second tool part are determined by performing image analysis of the taken image of the second tool part with the second position sensor arranged thereon.

By taking an image of the first tool part with the first position sensor arranged thereon and by taking an image of the second tool part with the second position sensor arranged thereon, and subsequently performing image analysis, the geometrical shape of the first tool part, the geometrical shape of the second tool part, the relation between the first position and the geometrical shape of the first tool part, and the relation between the second position and the geometrical shape of the second tool part can be determined. This information is then used to determine the setting of the cutting tool.

According to an embodiment, a combination of identification markers an image analysis can be used to determine the geometrical shape of the first tool part, the geometrical shape of the second tool part, the relation between the first position and the geometrical shape of the first tool part, and the relation between the second position and the geometrical shape of the second tool part.

According to an embodiment, the second tool part comprises a cutting edge, and wherein the method further comprises the steps of:
- determining a relation between the second position and the cutting edge; and
- determining a position of the cutting edge relative the first position at the first tool part.

The relation between the second position and the cutting edge is preferably determined in the same way as the relation between the first position and the geometrical shape of the first tool part, and the relation between the second position and the geometrical shape of the second tool part according to any of the embodiments described above.

The relation between the second position and the cutting edge comprises information regarding the distance and direction between the second position and the cutting edge.

Since it is the cutting edge that is in contact with the workpiece during the cutting operation, the analysis of the quality of the performed cutting operation is facilitated by analyzing the position of the cutting edge relative the fix reference position.

According to an embodiment, the imaging device is configured to take an image comprising both the first tool part with the first position sensor arranged thereon, and the second tool part with the second position sensor arranged thereon.

According to an embodiment, the second tool part comprises a first sub-part having a longitudinal axis B, and a second sub-part, wherein the second sub-part is radially and/or axially adjustable relative the first sub-part, wherein the second position is located at the first sub-part, wherein the method further comprises the steps of:
- obtaining a third position data comprising information regarding a third position at the second sub-part;
- determining the third position based on the third position data;
- determining a distance and a direction between the first position and the third position based on the first position and the third position, and/or a distance and a direction between the second position and the third position based on the second position and the third position;
- determining a geometrical shape of the first sub-part;
- determining a geometrical shape of the second sub-part;
- determining a relation between the second position and the geometrical shape of the first sub-part that comprises information regarding where at the first sub-part the second position is located;
- determining a relation between the third position and the geometrical shape of the second sub-part that comprises information regarding where at the second sub-part the third position is located;
- determining a setting of the cutting tool based at least on:
   - the determined relation between the first position and the geometrical shape of the first tool part,
   - the determined relation between the second position and the geometrical shape of the first sub-part,
   - the determined relation between the third position and the geometrical shape of the second sub-part,
   - the determined distance and direction between the first position and the second position, and
   - the determined distance and direction between the first position and the third position, and/or the determined distance and direction between the second position and the third position.

By further obtaining a third position data comprising information regarding the third position, a more detailed determination of the setting of the cutting tool is made.

The third position data is preferably generated by a third position sensor arranged at the third position.

The geometrical shape of the first sub-part is defined as the three-dimensional shape of the first sub-part.

The geometrical shape of the second sub-part is defined as the three-dimensional shape of the second sub-part.

The geometrical shape of the first sub-part, the geometrical shape of the second sub-part, the relation between the second position and the geometrical shape of the first part, and the relation between the third position and the geometrical shape of the second sub-part are preferably determined in the same way as the geometrical shape of the first tool part, and the relation between the first position and the geometrical shape of the first tool part as described above.

According to an embodiment, the cutting tool further comprises a third tool part, wherein the third tool part being radially and/or axially adjustable relative the first tool part, wherein the method further comprises the steps of:
- obtaining a fourth position data comprising information regarding a fourth position at the third tool part;
- determining the fourth position based on the fourth position data;
- determining a distance and a direction between the first position and the fourth position based on the first position and the fourth position;
- determining a geometrical shape of the third tool part;
- determining a relation between the fourth position and the geometrical shape of the third tool part that comprises information regarding where at the third tool part the fourth position is located;
- determining a setting of the cutting tool based at least on:
   - the determined distance and direction between the first position and the second position,
   - the determined distance and direction between the first position and the fourth position,
   - the determined relation between the first position and the geometrical shape of the first tool part,
   - the determined relation between the second position and the geometrical shape of the second tool part, and
   - the determined relation between the fourth position and the geometrical shape of the third tool part.

By determining a distance and a direction between the first position and the fourth position, and a relation between the fourth position and the geometrical shape of the third tool part, a more detailed determination of the setting of the cutting tool is made.

The fourth position data is preferably generated by a fourth position sensor arranged at the fourth position.

The geometrical shape of the third tool part is defined as the three-dimensional shape of the third tool part.

The geometrical shape of the third tool part, and the relation between the fourth position and the geometrical shape of the third tool part are preferably determined in the same way as the geometrical shape of the first tool part, and the relation between the first position and the geometrical shape of the first tool part as described above.

According to an embodiment, the method further comprises the step of:
- determining if the second tool part and the third tool part are symmetrically arranged relative the first tool part.

The symmetry between the second and third tool parts affects the amount of vibration in the cutting tool, and in order to evaluate the performance of the cutting tool it is preferred to know whether the second and third tools parts are symmetrically arranged or not.

The term "symmetrically arranged" is meant to represent a mirror symmetry between the second and third tool parts relative the longitudinal axis A of the first tool part.

According to an embodiment, the method further comprises the steps of:
- obtaining vibration data comprising information regarding an amount of vibration in the cutting tool;
- determining the amount of vibration in the cutting tool based on the vibration data; and
- determining a relation between the determined amount of vibration in the cutting tool and the determined setting of the cutting tool.

The vibration data is preferably generated by a vibration measurement device configured to measure the amount of vibration in the cutting tool.

The relation between the determined amount of vibration in the cutting tool and the determined setting of the cutting tool comprises information on the amount of vibration in the cutting tool that arises in a specific cutting operation with a specific setting of the cutting tool.

By determining a relation between the amount of vibration in the cutting tool and the setting of the cutting tool, it is possible to evaluate how different settings affect the amount of vibration in the cutting tool. This evaluation can be used to improve subsequent recommendations of settings for the cutting tool for a specific cutting operation.

According to an embodiment, the cutting tool further comprises an adjustment means for adjusting the second tool part relative the first tool part, wherein the method further comprises the steps of:
- obtaining a requested setting of the cutting tool;
- generating a control signal based on the requested setting;
- controlling the adjustment means based on the generated control signal.

By obtaining a requested setting, it is possible to compare the determined setting of the cutting tool with the requested setting in order to determine what adjustments of the setting of the cutting tool that is needed in order to reach the requested setting. By generating a control signal and controlling the adjustment means based on the control signal, the setting of the cutting tool can be adjusted from a distance.

According to an embodiment, the method further comprises the step of:
- storing the determined setting of the cutting tool in a database.

By storing the determined setting of the cutting tool in the database, it is possible to trace the history of the cutting tool usage. This can then be used to analyze the reasons for a potential low quality cutting operation or a short lifetime of the cutting tool.

The object of the present invention is further achieved by means of a computer program comprising computer readable code means to be run in the system, which computer readable code means when run in the system causes the system to perform the method described above.

The object of the present invention is further achieved by means of a carrier containing the computer program described above, wherein the carrier is one of an electronic signal, optical signal, radio signal or computer readable storage medium.

### BRIEF DESCRIPTION OF THE DRAWINGS

Figure 1 schematically illustrates a system for determining a setting of a cutting tool according to a first embodiment of the invention,
Figure 2 schematically illustrates a system for determining a setting of a cutting tool according to a second embodiment of the invention,
Figure 3 schematically illustrates a system for determining a setting of a cutting tool according to a third embodiment of the invention,
Figure 4 schematically illustrates a flow chart of example method steps for determining a setting of a cutting tool according to an embodiment of the invention.

### DETAILED DESCRIPTION

Like reference numbers refer to like elements throughout. The elements illustrated in the drawings are not necessary according to scale. Some elements might have been enlarged in order to clearly illustrate those elements.

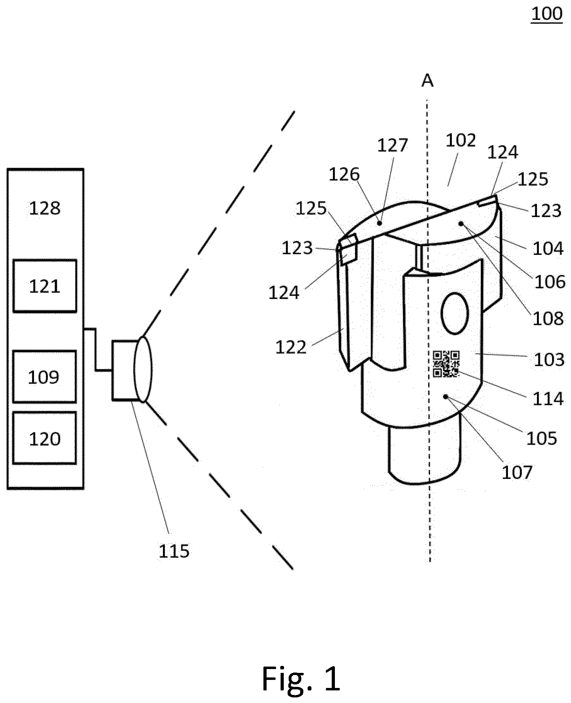

Figure 1 schematically illustrates a system for determining a setting of a cutting tool according to a first embodiment of the invention. The system (100) comprises a cutting tool (102) in form of a boring head. The cutting tool (102) comprises a first tool part (103), a second tool part (104), and a third tool part (122). The first tool part having a longitudinal axis A. The first tool part (103) is a non-adjustable tool part. The second tool part (104) and the third tool part (122) are radially adjustable relative the first tool part (103). The first, second and third tool parts (103,104, 122) are non-exchangeable tool parts. The second and third tool parts (104, 122) each comprise an insert pocket (123) with a cutting insert (124) provided with a cutting edge (125) mounted therein. The first tool part (103) comprises a first position sensor (105) arranged at a first position (107) at the first tool part (103). The second tool part (104) comprises a second position sensor (106) arranged at a second position (108) at the second tool part (104). The third tool part (122) comprises a fourth position sensor (126) arranged at a fourth position (127) at the third tool part (122). The cutting tool (102) further comprises an identification marker (114) in form of a machine readable code, such as a DataMatrix-code, comprising cutting tool identification data. The system further comprises an electronic unit (128) comprising a processing circuitry (109), a memory (120), and a user interface (121). The system (100) further comprises an optical reading device (115) operatively connected to the electronic unit (128). The first position sensor (105) is configured to generate first position data comprising information regarding the first position (107), the second position sensor (106) is configured to generate second position data comprising information regarding the second position (108), and the fourth position sensor (126) is configured to generate fourth position data comprising information regarding the fourth position (127). The memory (120) comprises instructions executable by the processing circuitry (109). The processing circuitry (109) is configured to cause the system (100) to:
- obtain the first position data;
- obtain the second position data;
- obtain the fourth position data;
- determine the first position (107) based on the first position data;
- determine the second position (108) based on the second position data;
- determine the fourth position (127) based on the fourth position data;
- determine a distance and a direction between the first position (107) and the second position (108) based on the first position (107) and the second position (108);
- determine a distance and a direction between the first position (107) and the fourth position (127) based on the first position (107) and the fourth position (127);
- read, by the optical reading device (115), the identification marker (114);
- determine the cutting tool identification data by decoding the machine readable code;
- determine a cutting tool information based on the cutting tool identification data, wherein the cutting tool information comprises information regarding:
   - a geometrical shape of the first tool part (103),
   - a geometrical shape of the second tool part (104),
   - a geometrical shape of the third tool part (122)
   - a relation between the first position (107) and the geometrical shape of the first tool part (103) that comprises information regarding where at the first tool part (103) the first position (107) is located,
   - a relation between the second position (108) and the geometrical shape of the second tool part (104) that comprises information regarding where at the second tool part (104) the second position (108) is located, and
   - a relation between the fourth position (127) and the geometrical shape of the third tool part (122) that comprises information regarding where at the third tool part (122) the fourth position (127) is located;
- determine the geometrical shape of the first tool part (103) based on the cutting tool information;
- determine the geometrical shape of the second tool part (104) based on the cutting tool information;
- determine the geometrical shape of the third tool part (122) based on the cutting tool information;
- determine the relation between the first position (107) and the geometrical shape of the first tool part (103) based on the cutting tool information;
- determine the relation between the second position (108) and the geometrical shape of the second tool part (104) based on the cutting tool information;
- determine the relation between the fourth position (127) and the geometrical shape of the third tool part (122) based on the cutting tool information; and
- determine a setting of the cutting tool (102) based on:
   - the determined distance and direction between the first position (107) and the second position (108),
   - the determined distance and direction between the first position (107) and the fourth position (127) at the third tool part (122),
   - the determined relation between the first position (107) and the geometrical shape of the first tool part (103),
   - the determined relation between the second position (108) and the geometrical shape of the second tool part (104), and
   - the determined relation between the fourth position (127) and the geometrical shape of the third tool part (122).

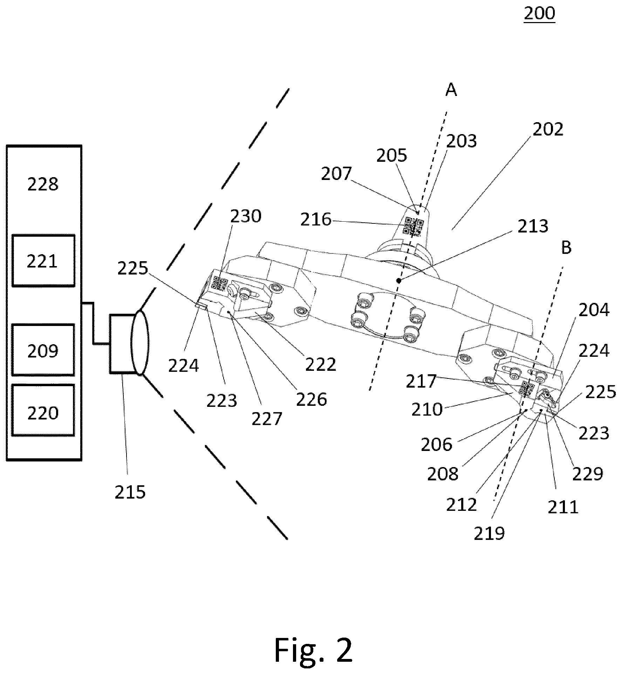

Figure 2 schematically illustrates a system for determining a setting of a cutting tool according to a second embodiment of the invention. The system (200) comprises a cutting tool (202) in form of a boring bridge. The cutting tool (202) comprises a first tool part (203), a second tool part (204), and a third tool part (222). The first tool part having a longitudinal axis A. The first tool part (203) is a non-adjustable tool part. The second tool part (204) and the third tool part (222) are radially and axially adjustable relative the first tool part (203). The second tool part (204) comprises a first sub-part (210) having a longitudinal axis B, and a second sub-part (211). The second sub-part (211) is axially adjustable relative the first sub-part (210). The second and third tool parts (204, 222) each comprise an insert pocket (223) with a cutting insert (224) provided with a cutting edge (225) mounted therein. The cutting inserts (224) are secured to the second and third tool parts (203,222) by use of fastening clamps (229). The first tool part (203) comprises a first position sensor (205) arranged at a first position (207) at the first tool part (203). The second tool part (204) comprises a second position sensor (206) arranged at a second position (208) at the first sub-part (210). The second tool part (204) further comprises a third position sensor (212) arranged at a third position (219) at the second sub-part (211). The third tool part (222) comprises a fourth position sensor (226) arranged at a fourth position (227) at the third tool part (222). The first tool part (203) further comprises a first identification marker (216) in form of a first machine readable code, such as a DataMatrix-code, comprising first tool part identification data. The second tool part (204) further comprises a second identification marker (217) in form of a second machine readable code, such as a DataMatrix-code, comprising second tool part identification data. The third tool part (222) further comprises a third identification marker (230) in form of a third machine readable code, such as a DataMatrix-code, comprising third tool part identification data. The system (200) further comprises an electronic unit (228) comprising a processing circuitry (209), a memory (220), and a user interface (221). The system (200) further comprises an optical reading device (215) operatively connected to the electronic unit (228). The first position sensor (205) is configured to generate first position data comprising information regarding the first position (207), the second position sensor (206) is configured to generate second position data comprising information regarding the second position (208), the third position sensor (212) is configured to generate third position data comprising information regarding the third position (219), and the fourth position sensor (226) is configured to generate fourth position data comprising information regarding the fourth position (227). The memory (220) comprises instructions executable by the processing circuitry (209). The processing circuitry (209) is configured to cause the system (200) to:
- obtain the first position data;
- obtain the second position data;
- obtain the third position data;
- obtain the fourth position data;
- determine the first position (207) based on the first position data;
- determine the second position (208) based on the second position data;
- determine the third position (219) based on the third position data;
- determine the fourth position (227) based on the fourth position data;
- determine a distance and a direction between the first position (207) and the second position (208) based on the first position (207) and the second position (208);
- determine a distance and a direction between the first position (207) and the third position (219) based on the first position (207) and the third position (219), and/or a distance and a direction between the second position (208) and the third position (219) based on the second position (208) and the third position (219);
- determine a distance and a direction between the first position (207) and the fourth position (227) based on the first position (207) and the fourth position (227);
- read, by the optical reading device (215), the first identification marker (216);
- read, by the optical reading device (215), the second identification marker (217);
- read, by the optical reading device (215), the third identification marker (230);
- determine the first tool part identification data by decoding the first machine readable code;
- determine the second tool part identification data by decoding the second machine readable code;
- determine the third tool part identification data by decoding the third machine readable code;
- determine a first tool part information based on the first tool part identification data, wherein the first tool part information comprises information regarding:
   - a geometrical shape of the first tool part (203),
   - a relation between the first position (207) and the geometrical shape of the first tool part (203) that comprises information regarding where at the first tool part (203) the second position (207) is located;
- determine a second tool part information based on the second tool part identification data, wherein the second tool part information comprises information regarding:
   - a geometrical shape of the first sub-part (210),
   - a geometrical shape of the second sub-part (211),
   - a relation between the second position (208) and the geometrical shape of the first sub-part (210) that comprises information regarding where at the first sub-part (210) the second position (208) is located, and
   - a relation between the third position (219) and the geometrical shape of the second sub-part (211) that comprises information regarding where at the second sub-part (211) the third position (219) is located;
- determine a third tool part information based on the third tool part identification data, wherein the third tool part information comprises information regarding:
   - a geometrical shape of the third tool part (222), and
   - a relation between the fourth position (227) and the geometrical shape of the third tool part (222) that comprises information regarding where at the third tool part (222) the fourth position (227) is located;
- determine the geometrical shape of the first tool part (203) based on the first tool part information;
- determine the geometrical shape of the first sub-part (210) based on the second tool part information;
- determine the geometrical shape of the second sub-part (211) based on the second tool part information;
- determine the geometrical shape of the third tool part (203) based on the third tool part information;
- determine the relation between the first position (207) and the geometrical shape of the first tool part (203) based on the first tool part information;
- determine the relation between the second position (208) and the geometrical shape of the first sub-part (210) based on the second tool part information;
- determine the relation between the third position (219) and the geometrical shape of the second sub-part (211) based on the second tool part information;
- determine the relation between the fourth position (227) and the geometrical shape of the third tool part (222) based on the third tool part information; and
- determine a setting of the cutting tool (202) based on:
   - the determined distance and direction between the first position (207) and the second position (208),
   - the determined distance and direction between the first position (207) and the third position (219), and/or between the second position (208) and the third position (219),
   - the determined distance and direction between the first position (207) and the fourth position (227) at the third tool part (222),
   - the determined relation between the first position (207) and the geometrical shape of the first tool part (203),
   - the determined relation between the second position (208) and the geometrical shape of the first sub-part (210),
   - the determined relation between the third position (219) and the geometrical shape of the second sub-part (211) based on the second tool part information, and
   - the determined relation between the fourth position (227) and the geometrical shape of the third tool part (222).

The cutting tool (202) further comprises a vibration measurement device (213). The vibration measuring device (213) is configured to generate vibration data comprising information regarding an amount of vibration in the cutting tool (202). The processing circuitry (209) is further configured to cause the system (200) to:
- obtain the vibration data;
- determine the amount of vibration in the cutting tool (202) based on the vibration data;
- determine a relation between the determined amount of vibration in the cutting tool (202) and the determined setting of the cutting tool (202).

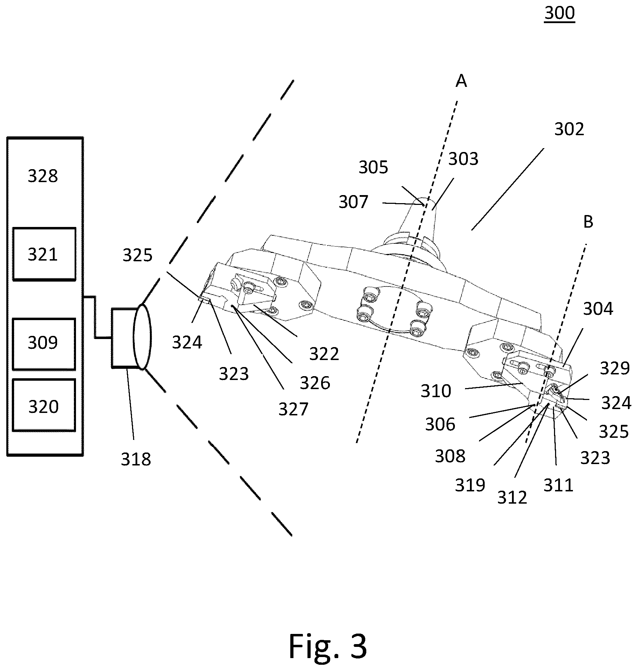

Figure 3 schematically illustrates a system for determining a setting of a cutting tool according to a third embodiment of the invention. The system (300) comprises a cutting tool (302) in form of a boring bridge. The cutting tool (302) comprises a first tool part (303), a second tool part (304), and a third tool part (322). The first tool part having a longitudinal axis A. The first tool part (303) is a non-adjustable tool part. The second tool part (304) and the third tool part (322) are radially and axially adjustable relative the first tool part (303). The second tool part (304) comprises a first sub-part (310) having a longitudinal axis B, and a second sub-part (311). The second sub-part (311) is axially adjustable relative the first sub-part (310). The second and third tool parts (304, 322) each comprise an insert pocket (323) with a cutting insert (324) provided with a cutting edge (325) mounted therein. The cutting inserts (324) are secured to the second and third tool parts (303,322) by use of fastening clamps (329). The first tool part (303) comprises a first position sensor (305) arranged at a first position (307) at the first tool part (303). The second tool part (304) comprises a second position sensor (306) arranged at a second position (308) at the first sub-part (310). The second tool part (304) further comprises a third position sensor (312) arranged at a third position (319) at the second sub-part (311). The third tool part (322) comprises a fourth position sensor (326) arranged at a fourth position (327) at the third tool part (322). The system (300) further comprises an electronic unit (328) comprising a processing circuitry (309), a memory (320), and a user interface (321). The system (300) further comprises an imaging device (318) operatively connected to the electronic unit (328). The first position sensor (305) is configured to generate first position data comprising information regarding the first position (307), the second position sensor (306) is configured to generate second position data comprising information regarding the second position (308), the third position sensor (312) is configured to generate third position data comprising information regarding the third position (319), and the fourth position sensor (326) is configured to generate fourth position data comprising information regarding the fourth position (327). The memory (320) comprises instructions executable by the processing circuitry (309). The processing circuitry (309) is configured to cause the system (300) to:
- obtain the first position data;
- obtain the second position data;
- obtain the third position data;
- obtain the fourth position data;
- determine the first position (307) based on the first position data;
- determine the second position (308) based on the second position data;
- determine the third position (319) based on the third position data;
- determine the fourth position (327) based on the fourth position data;
- determine a distance and a direction between the first position (307) and the second position (308) based on the first position (307) and the second position (308);
- determine a distance and a direction between the first position (307) and the third position (319) based on the first position (307) and the third position (319), and/or a distance and a direction between the second position (308) and the third position (319) based on the second position (308) and the third position (319);
- determine a distance and a direction between the first position (307) and the fourth position (327) based on the first position (307) and the fourth position (327);
- take an image, by the imaging device (318), of the first tool part (303) with the first position sensor (305) arranged thereon;
- take an image, by the imaging device (318), of the first sub-part (310) with the second position sensor (306) arranged thereon;
- take an image, by the imaging device (318), of the second sub-part (311) with the third position sensor (312) arranged thereon;
- taken an image, by the imaging device (318), of the third tool part (322) with the fourth position sensor (326) arranged thereon;
- determine a geometrical shape of the first tool part (303) by performing image analysis of the taken image of the first tool part (303) with the first position sensor (305) arranged thereon;
- determine a geometrical shape of the first sub-part (310) by performing image analysis of the taken image of the first sub-part (310) with the second position sensor (306) arranged thereon;
- determine a geometrical shape of the second sub-part (311) by performing image analysis of the taken image of the second sub-part (311) with the third position sensor (312) arranged thereon;
- determine a geometrical shape of the third tool part (322) by performing image analysis of the taken image of the third tool part (322) with the fourth position sensor (326) arranged thereon;
- determine a relation between the first position (307) and the geometrical shape of the first tool part (303) that comprises information regarding where at the first tool part (303) the first position (307) is located by performing image analysis of the taken image of the first tool part (303) with the first position sensor (305) arranged thereon;
- determine a relation between the second position (308) and the geometrical shape of the first sub-part (310) that comprises information regarding where at the first sub-part (310) the second position (308) is located by performing image analysis of the taken image of the first sub-part (310) with the second position sensor (306) arranged thereon;
- determine a relation between the third position (319) and the geometrical shape of the second sub-part (311) that comprises information regarding where at the second sub-part (311) the third position (319) is located by performing image analysis of the taken image of the second sub-part (311) with the third position sensor (312) arranged thereon;
- determine a relation between the fourth position (327) and the geometrical shape of the third tool part (322) that comprises information regarding where at the third tool part the fourth position is located by performing image analysis of the taken image of the third tool part (322) with the fourth position sensor (326) arranged thereon;
- determine a setting of the cutting tool (302) based on:
   - the determined distance and direction between the first position (307) and the second position (308) at the first sub-part (310),
   - the determined distance and direction between the first position (307) and the third position (319), and/or between the second position (308) and the third position (319),
   - the determined distance and direction between the first position (307) and the fourth position (327) at the third tool part (322),
   - the determined relation between the first position (307) and the geometrical shape of the first tool part (303),
   - the determined relation between the second position (308) and the geometrical shape of the first sub-part (310),
   - the determined relation between the third position (319) and the geometrical shape of the second sub-part (311) based on the second tool part information, and
   - the determined relation between the fourth position (327) and the geometrical shape of the third tool part (322).

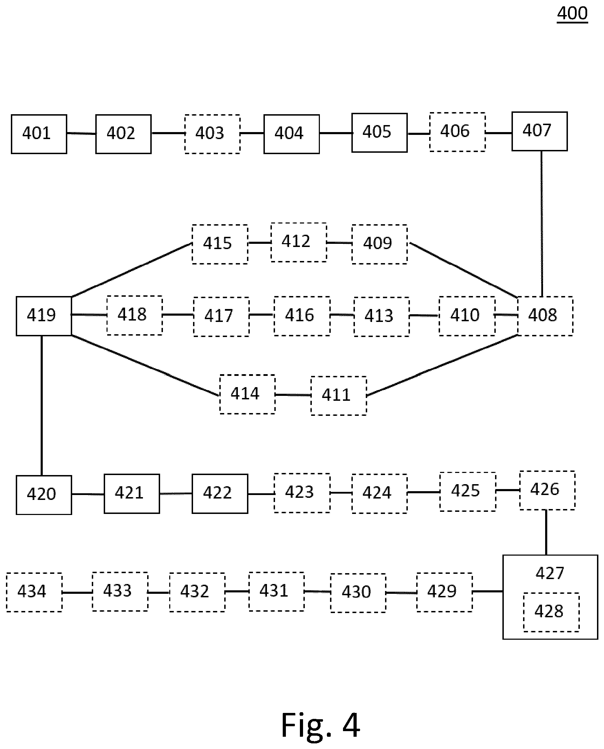

Figure 4 schematically illustrates a flow chart of example method steps for determining a setting of a cutting tool according to an embodiment of the invention. The method (400) comprises the steps of:
- obtaining (401) a first position data comprising information regarding a first position (107,207,307) at the first tool part (103,203,303);
- obtaining (402) a second position data comprising information regarding a second position (108,208,308) at the second tool part (104,204,304);
- determining (404) the first position (107,207,307) based on the first position data;
- determining (405) the second position (108,208,308) based on the second position data;
- determining (407) a distance and a direction between the first position (107,207,307) and the second position (108,208,308) based on the first position (107,207,307) and the second position (108,208,308);
- determining (419) a geometrical shape of the first tool part (103,203,303);
- determining (420) a geometrical shape of the second tool part (104,204,304);
- determining (421) a relation between the first position (107,207,307) and the geometrical shape of the first tool part (103,203,303) that comprises information regarding where at the first tool part (103,203,303) the first position (107,207,307) is located;
- determining (422) a relation between the second position (108,208,308) and the geometrical shape of the second tool part (104,204,304) that comprises information regarding where at the second tool part (104,204,304) the second position (108,208,308) is located;
- determining (427) a setting of the cutting tool (102,202,302) based on:
   - the determined distance and direction between the first position (107,207,307) and the second position (108,208,308)
   - the determined relation between the first position (107,207,307) and the geometrical shape of the first tool part (103,203,303),
   - the determined relation between the second position (108,208,308) and the geometrical shape of the second tool part (104,204,304).

In some embodiments, the method may further comprise the steps of:
- reading (409) the identification marker (114);
- determining (412) the cutting tool identification data by decoding the machine readable code;
- determining (415) a cutting tool information based on the cutting tool identification data, wherein the cutting tool information comprises information regarding:
   - the geometrical shape of the first tool part (103),
   - the geometrical shape of the second tool part (104),
   - the relation between the first position (107) and the geometrical shape of the of the first tool part (103), and
   - the relation between the second position (108) and the geometrical shape of the second tool part (104).

In some embodiments, the method may further comprise the steps of:
- reading (410) the first and second identification markers (216,217);
- determining (413) the first tool part identification data by decoding the first machine readable code;
- determining (416) the second tool part identification data by decoding the second machine readable code;
- determining (417) a first tool part information based on the first tool part identification data, wherein the first tool part information comprises information regarding:
   - the geometrical shape of the first tool part (203), and
   - the relation between the first position (207) and the geometrical shape of the first tool part (203);
- determining (418) a second tool part information based on the second tool part identification data, wherein the second tool part information comprises information regarding:
   - the geometrical shape of the second tool part (204), and
   - the relation between the second position (208) and the geometrical shape of the second tool part (204).

In some embodiments, the method may further comprise the steps of:
- taking (411) an image of the first tool part (303) with the first position sensor (305) arranged thereon;
- taking (414) an image of the second tool part (304) with the second position sensor (306) arranged thereon.

In some embodiments, the method may further comprise the steps of:
- obtaining (403) a third position data comprising information regarding a third position (219,319) at the second sub-part (211,311);
- determining (406) the third position (219,319) based on the third position data;
- determining (408) a distance and a direction between the first position (207,307) and the third position (219,319) based on the first position (207,307) and the third position (219,319), and/or a distance and a direction between the second position (208,308) and the third position (219,319) based on the second position (208,308) and the third position (219,319);
- determining (423) a geometrical shape of the first sub-part (210,310);
- determining (424) a geometrical shape of the second sub-part (211,311);
- determining (425) a relation between the second position (208,308) and the geometrical shape of the first sub-part (210,310) that comprises information regarding where at the first sub-part (210,310) the second position (208,308) is located;
- determining (426) a relation between the third position (219,319) and the geometrical shape of the second sub-part (211,311) that comprises information regarding where at the second sub-part (211,311) the second position (219,319) is located;
- determining (428) a setting of the cutting tool (202,302) based on:
   - the determined relation between the first position (207,307) and the geometrical shape of the first tool part (203,303),
   - the determined relation between the second position (208,308) and the geometrical shape of the first sub-part (210,310),
   - the determined relation between the third position (219,319) and the geometrical shape of the second sub-part (211,311),
   - the determined distance and direction between the first position (207,307) and the second position (208,308), and
   - the determined distance and direction between the first position (207,307) and the third position (219,319), and/or the determined distance and direction between the second position (208,308) and the third position (219,319);

In some embodiments, the method may further comprise the steps of:
- obtaining (429) vibration data comprising information regarding an amount of vibration in the cutting tool (202);
- determining (430) the amount of vibration in the cutting tool (202) based on the vibration data;
- determining (431) a relation between the determined amount of vibration in the cutting tool (202) and the determined setting of the cutting tool (202);

In some embodiments, the method may further comprise the steps of:
- obtaining (432) a requested setting of the cutting tool (102,202,302);
- generating (433) a control signal based on the requested setting;
- controlling (434) the adjustment means based on the generated control signal.

Figure 4 illustrates an example of method steps. The method can comprise additional steps. Some of the method steps can be performed simultaneously. The method steps can be performed in a different order.

## Claims

1. A system (100,200,300) for determining a setting of a cutting tool (102,202,302), wherein the system (100,200,300) comprises a cutting tool (102,202,302) comprising a first tool part (103,203,303) having a longitudinal axis A and a second tool part (104,204,304), wherein the first tool part (103,203,303) is a non-adjustable tool part, and wherein the second tool part (104,204,304) is radially and/or axially adjustable relative the first tool part (103,203,303), wherein the second tool part (104,204,304) comprises a second position sensor (106,206,306) arranged at a second position (108,208,308) at the second tool part (104,204,304), and wherein the second position sensor (106,206,306) is configured to generate second position data comprising information regarding the second position (108,208,308), wherein the system (100,200,300) further comprises a processing circuitry (109,209,309), and a memory (120,220,320), wherein the memory (120,220,320) comprises instructions executable by the processing circuitry (109,209,309), **characterized in that** the first tool part (103,203,303) comprises a first position sensor (105,205,305) arranged at a first position (107,207,307) at the first tool part (103,203,303), and wherein the first position sensor (105,205,305) is configured to generate first position data comprising information regarding the first position (107,207,307), wherein the processing circuitry (109,209,309) is configured to cause the system (100,200,300) to:
- obtain the first position data;
- obtain the second position data;
- determine the first position (107,207,307) based on the first position data;
- determine the second position (108,208,308) based on the second position data;
- determine a distance and a direction between the first position (107,207,307) and the second position (108,208,308) based on the first position (107,207,307) and the second position (108,208,308);
- determine a geometrical shape of the first tool part (103,203,303);
- determine a geometrical shape of the second tool part (104,204,304);
- determine a relation between the first position (107,207,307) and the geometrical shape of the first tool part (103,203,303) that comprises information regarding where at the first tool part (103,203,303) the first position (107,207,307) is located;
- determine a relation between the second position (108,208,308) and the geometrical shape of the second tool part (104,204,304) that comprises information regarding where at the second tool part (104,204,304) the second position (108,208,308) is located; and
- determine a setting of the cutting tool (102,202,302) based at least on:
- the determined distance and direction between the first position (107,207,307) and the second position (108,208,308),
- the determined relation between the first position (107,207,307) and the geometrical shape of the first tool part (103,203,303), and
- the determined relation between the second position (108,208,308) and the geometrical shape of the second tool part (104,204,304).

2. The system (100) according to claim 1, wherein the first tool part (103) and the second tool part (104) are non-exchangeable tool parts, wherein the cutting tool (102) comprises an identification marker (114), wherein the identification marker (114) is a machine readable code comprising cutting tool identification data, wherein the system (100) further comprises a reading device (115) configured to read the identification marker (114), wherein the processing circuitry (109) is further configured to cause the system (100) to:
- read, by the reading device (115), the identification marker (114);
- determine the cutting tool identification data by decoding the machine readable code;
- determine a cutting tool information based on the cutting tool identification data, wherein the cutting tool information comprises information regarding:
- the geometrical shape of the first tool part (103),
- the geometrical shape of the second tool part (104),
- the relation between the first position (107) and the geometrical shape of the first tool part (103), and
- the relation between the second position (108) and the geometrical shape of the second tool part (104); wherein
the geometrical shape of the first tool part (103), the geometrical shape of the second tool part (104), the relation between the first position (107) and the geometrical shape of the first tool part (103), and the relation between the second position (108) and the geometrical shape of the second tool part (104) are determined based on the cutting tool information.

3. The system (200) according to claim 1, wherein the first tool part (203) comprises a first identification marker (216), and wherein the second tool part (204) comprises a second identification marker (217), wherein the first identification marker (216) is a first machine readable code comprising first tool part identification data, and wherein the second identification marker (217) is a second machine readable code comprising second tool part identification data, wherein the system (200) further comprises a reading device (215) configured to read the first and second identification markers (216,217), wherein the processing circuitry (209) is further configured to cause the system (200) to:
- read, by the reading device (215), the first and second identification markers (216,217);
- determine the first tool part identification data by decoding the first machine readable code;
- determine the second tool part identification data by decoding the second machine readable code;
- determine a first tool part information based on the first tool part identification data, wherein the first tool part information comprises information regarding:
- the geometrical shape of the first tool part (203), and
- the relation between the first position (207) and the geometrical shape of the first tool part (203);
- determine a second tool part information based on the second tool part identification data, wherein the second tool part information comprises information regarding:
- the geometrical shape of the second tool part (204), and
- the relation between the second position (208) and the geometrical shape of the second tool part (204); wherein
the geometrical shape of the first tool part (203), and the relation between the first position (207) and the geometrical shape of the first tool part (203) are determined based on the first tool part information; and wherein
the geometrical shape of the second tool part (204), and the relation between the second position (208) and the geometrical shape of the second tool part (204) are determined based on the second tool part information.

4. The system (300) according to claim 1, wherein the system (300) further comprises an imaging device (318), wherein the processing circuitry (309) is further configured to cause the system (300) to:
- take an image, by the imaging device (318), of the first tool part (303) with the first position sensor (305) arranged thereon;
- take an image, by the imaging device (318), of the second tool part (304) with the second position sensor (306) arranged thereon; wherein
the geometrical shape of the first tool part (303), and the relation between the first position (307) and the geometrical shape of the first tool part (303) are determined by performing image analysis of the taken image of the first tool part (303) with the first position sensor (305) arranged thereon; and wherein
the geometrical shape of the second tool part (304), and the relation between the second position (308) and the geometrical shape of the second tool part (304) are determined by performing image analysis of the taken image of the second tool part (304) with the second position sensor (306) arranged thereon.

5. The system (200,300) according to any of the preceding claims, wherein the second tool part (204,304) comprises a first sub-part (210,310) having a longitudinal axis B and a second sub-part (211,311), wherein the second sub-part (211,311) is radially and/or axially adjustable relative the first sub-part (210,310), wherein the second position (208,308) is located at the first sub-part (210,310), and wherein the second sub-part (211,311) comprises a third position sensor (212,312) arranged at a third position (219,319) at the second sub-part (211,311), wherein the third position sensor (212,312) is configured to generate third position data comprising information regarding the third position (219,319), wherein the processing circuitry (209,309) is further configured to cause the system (200,300) to:
- obtain the third position data;
- determine the third position (219,319) based on the third position data;
- determine a distance and a direction between the first position (207,307) and the third position (219,319) based on the first position (207,307) and the third position (219,319), and/or a distance and a direction between the second position (208,308) and the third position (219,319) based on the second position (208,308) and the third position (219,319);
- determine a geometrical shape of the first sub-part (210,310);
- determine a geometrical shape of the second sub-part (211,311);
- determine a relation between the second position (208,308) and the geometrical shape of the first sub-part (210,310) that comprises information regarding where at the first sub-part (210,310) the second position (208,308) is located;
- determine a relation between the third position (219,319) and the geometrical shape of the second sub-part (211,311) that comprises information regarding where at the second sub-part (211,311) the third position (219,319) is located; and
- determine a setting of the cutting tool (202,302) based at least on:
- the determined relation between the first position (207,307) and the geometrical shape of the first tool part (203,303),
- the determined relation between the second position (208,308) and the geometrical shape of the first sub-part (210,310),
- the determined relation between the third position (219,319) and the geometrical shape of the second sub-part (211,311);
- the determined distance and direction between the first position (207,307) and the second position (208,308), and
- the determined distance and direction between the first position (207,307) and the third position (219,319) and/or the determined distance and direction between the second position (208,308) and the third position (219,319).

6. The system (200,300) according to claim 5, wherein the first sub-part (210,310) is radially adjustable relative the first tool part (203,303), and wherein the second sub-part (211,311) is axially adjustable relative the first tool part (203,303).

7. The system (200) according to any of the preceding claims, wherein the system (200) further comprises a vibration measuring device (213), wherein the vibration measuring device (213) is configured to generate vibration data comprising information regarding an amount of vibration in the cutting tool (202), wherein the processing circuitry (209) is further configured to cause the system (200) to:
- obtain the vibration data;
- determine the amount of vibration in the cutting tool (202) based on the vibration data;
- determine a relation between the determined amount of vibration in the cutting tool (202) and the determined setting of the cutting tool (202).

8. The system (100,200,300) according to any of the preceding claims, wherein the cutting tool (102,202,302) further comprises an adjustment means for adjusting the second tool part (104,204,304) relative the first tool part (103,203,303), and wherein the system (100,200,300) further comprises a user interface (121,221,321) configured to receive a requested setting of the cutting tool (102,202,302), and wherein the system (100,200,300) further comprises a control unit, wherein the processing circuitry (109,209,309) is further configured to cause the system to:
- obtain a requested setting via the user interface (121,221,321);
- generate a control signal based on the requested setting; and
- control, by the control unit, the adjustment means based on the generated control signal.

9. A method (400) for determining a setting of a cutting tool (102,202,302) comprising a first tool part (103,203,303) having a longitudinal axis A and a second tool part (104,204,304), wherein the first tool part (103,203,303) is a non-adjustable tool part, and wherein the second tool part (104,204,304) is radially and/or axially adjustable relative the first tool part (103,203,303), wherein the method (400) is **characterized by** the steps of:
- obtaining (401) a first position data comprising information regarding a first position (107,207,307) at the first tool part (103,203,303);
- obtaining (402) a second position data comprising information regarding a second position (108,208,308) at the second tool part (104,204,304);
- determining (404) the first position (107,207,307) based on the first position data;
- determining (405) the second position (108,208,308) based on the second position data;
- determining (407) a distance and a direction between the first position (107,207,307) and the second position (108,208,308) based on the first position (107,207,307) and the second position (108,208,308);
- determining (419) a geometrical shape of the first tool part (103,203,303);
- determining (420) a geometrical shape of the second tool part (104,204,304);
- determining (421) a relation between the first position (107,207,307) and the geometrical shape of the first tool part (103,203,303) that comprises information regarding where at the first tool part (103,203,303) the first position (107,207,307) is located;
- determining (422) a relation between the second position (108,208,308) and the geometrical shape of the second tool part (104,204,304) that comprises information regarding where at the second tool part (104,204,304) the second position (108,208,308) is located; and
- determining (427) a setting of the cutting tool (102,202,302) based at least on:
- the determined distance and direction between the first position (107,207,307) and the second position (108,208,308),
- the determined relation between the first position (107,207,307) and the geometrical shape of the first tool part (103,203,303), and
- the determined relation between the second position (108,208,308) and the geometrical shape of the second tool part (104,204,304).

10. The method according to claim 9, wherein the first tool part (103) and the second tool part (104) are non-exchangeable tool parts, wherein the cutting tool (102) comprises an identification marker (114), wherein the identification marker (114) is a machine readable code comprising cutting tool identification data, wherein the method (400) further comprises the steps of:
- reading (409) the identification marker (114);
- determining (412) the cutting tool identification data by decoding the machine readable code;
- determining (415) a cutting tool information based on the cutting tool identification data, wherein the cutting tool information comprises information regarding:
- the geometrical shape of the first tool part (103),
- the geometrical shape of the second tool part (104),
- the relation between the first position (107) and the geometrical shape of the of the first tool part (103), and
- the relation between the second position (108) and the geometrical shape of the second tool part (104); wherein
the geometrical shape of the first tool part (103), the geometrical shape of the second tool part (104), the relation between the first position (107) and the geometrical shape of the first tool part (103), and the relation between the second position (108) and the geometrical shape of the second tool part (104) are determined (419,420,421,422) based on the cutting tool information.

11. The method (400) according to claim 9, wherein the first tool part (203) comprises a first identification marker (216), and wherein the second tool part (204) comprises a second identification marker (217), wherein the first identification marker (216) is a first machine readable code comprising first tool part identification data, and wherein the second identification marker (217) is a second machine readable code comprising second tool part identification data, wherein the method (400) further comprises the steps of:
- reading (410) the first and second identification markers (216,217);
- determining (413) the first tool part identification data by decoding the first machine readable code;
- determining (416) the second tool part identification data by decoding the second machine readable code;
- determining (417) a first tool part information based on the first tool part identification data, wherein the first tool part information comprises information regarding:
- the geometrical shape of the first tool part (203), and
- the relation between the first position (207) and the geometrical shape of the first tool part (203);
- determining (418) a second tool part information based on the second tool part identification data, wherein the second tool part information comprises information regarding:
- the geometrical shape of the second tool part (204), and
- the relation between the second position (208) and the geometrical shape of the second tool part (204); wherein
the geometrical shape of the first tool part (203), and the relation between the first position (207) and the geometrical shape of the first tool part (203) are determined (419,421) based on the first tool part information; and wherein
the geometrical shape of the second tool part (204), and the relation between the second position (208) and the geometrical shape of the second tool part (204) are determined (420,422) based on the second tool part information.

12. The method (400) according to claim 9, wherein the first tool part (303) comprises a first position sensor (305) arranged at the first position (307), and wherein the second tool part (304) comprises a second position sensor (306) arranged at the second position (308), wherein the method (400) further comprises the steps of:
- taking (411) an image of the first tool part (303) with the first position sensor (305) arranged thereon;
- taking (414) an image of the second tool part (304) with the second position sensor (306) arranged thereon; wherein
the geometrical shape of the first tool part (303), and the relation between the first position (307) and the geometrical shape of the first tool part (303) are determined (419,421) by performing image analysis of the taken image of the first tool part (303) with the first position sensor (305) arranged thereon; and wherein
the geometrical shape of the second tool part (304), and the relation between the second position (308) and the geometrical shape of the second tool part (304) are determined (420,422) by performing image analysis of the taken image of the second tool part (304) with the second position sensor (306) arranged thereon.

13. The method (400) according to any of claims 9-12, wherein the second tool part (204,304) comprises a first sub-part (210,310) having a longitudinal axis B and a second sub-part (211,311), wherein the second sub-part (211,311) is radially and/or axially adjustable relative the first sub-part (210,310), wherein the second position (208,308) is located at the first sub-part (210,310), wherein the method (400) further comprises the steps of:
- obtaining (403) a third position data comprising information regarding a third position (219,319) at the second sub-part (211,311);
- determining (406) the third position (219,319) based on the third position data;
- determining (408) a distance and a direction between the first position (207,307) and the third position (219,319) based on the first position (207,307) and the third position (219,319), and/or a distance and a direction between the second position (208,308) and the third position (219,319) based on the second position (208,308) and the third position (219,319);
- determining (423) a geometrical shape of the first sub-part (210,310);
- determining (424) a geometrical shape of the second sub-part (211,311);
- determining (425) a relation between the second position (208,308) and the geometrical shape of the first sub-part (210,310) that comprises information regarding where at the first sub-part (210,310) the second position (208,308) is located;
- determining (426) a relation between the third position (219,319) and the geometrical shape of the second sub-part (211,311) that comprises information regarding where at the second sub-part (211,311) the third position (219,319) is located;
- determining (428) a setting of the cutting tool (202,302) based at least on:
- the determined relation between the first position (207,307) and the geometrical shape of the first tool part (203,303),
- the determined relation between the second position (208,308) and the geometrical shape of the first sub-part (210,310),
- the determined relation between the third position (219,319) and the geometrical shape of the second sub-part (211,311),
- the determined distance and direction between the first position (207,307) and the second position (208,308), and
- the determined distance and direction between the first position (207,307) and the third position (219,319), and/or the determined distance and direction between the second position (208,308) and the third position (219,319).

14. The method according to any of claims 9-13, wherein the method (400) further comprises the steps of:
- obtaining (429) vibration data comprising information regarding an amount of vibration in the cutting tool (202);
- determining (430) the amount of vibration in the cutting tool (202) based on the vibration data; and
- determining (431) a relation between the determined amount of vibration in the cutting tool (202) and the determined setting of the cutting tool (202).

15. The method according to any of claims 9-14, wherein the cutting tool (102,202,302) further comprises an adjustment means for adjusting the second tool part (104,204,304) relative the first tool part (103,203,303), wherein the method (400) further comprises the steps of:
- obtaining (432) a requested setting of the cutting tool (102,202,302);
- generating (433) a control signal based on the requested setting;
- controlling (434) the adjustment means based on the generated control signal.

16. A computer program comprising computer readable code means to be run in the system (100,200,300) according to any of claims 1-8, which computer readable code means when run in the system (100,200,300) causes the system (100,200,300) to perform the method according to any of claims 9-15.

17. A carrier containing the computer program according to claim 16, wherein the carrier is one of an electronic signal, optical signal, radio signal or computer readable storage medium.

## Patentansprüche

1. System (100, 200, 300) zur Bestimmung einer Einstellung eines Schneidwerkzeugs (102, 202, 302), wobei das System (100, 200, 300) ein Schneidwerkzeug (102, 202, 302) umfasst, das einen ersten Werkzeugteil (103, 203, 303) mit einer Längsachse A und einen zweiten Werkzeugteil (104, 204, 304) umfasst, wobei der erste Werkzeugteil (103, 203, 303) ein nicht verstellbarer Werkzeugteil ist, und wobei der zweite Werkzeugteil (104, 204, 304) radial und/oder axial relativ zum ersten Werkzeugteil (103, 203, 303) verstellbar ist, wobei der zweite Werkzeugteil (104, 204, 304) einen zweiten Positionssensor (106, 206, 306) umfasst, der an einer zweiten Position (108, 208, 308) an dem zweiten Werkzeugteil (104, 204, 304) angeordnet ist, und wobei der zweite Positionssensor (106, 206, 306) dazu eingerichtet ist, zweite Positionsdaten zu erzeugen, die Informationen hinsichtlich der zweiten Position (108, 208, 308) enthalten, wobei das System (100, 200, 300) ferner eine Verarbeitungsschaltung (109, 209, 309) und einen Speicher (120, 220, 320) umfasst, wobei der Speicher (120, 220, 320) Anweisungen enthält, die durch die Verarbeitungsschaltung (109, 209, 309) ausführbar sind, **dadurch gekennzeichnet, dass** der erste Werkzeugteil (103, 203, 303) einen ersten Positionssensor (105, 205, 305) umfasst, der an einer ersten Position (107, 207, 307) an dem ersten Werkzeugteil (103, 203, 303) angeordnet ist, und wobei der erste Positionssensor (105, 205, 305) dazu eingerichtet ist, erste Positionsdaten zu erzeugen, die Informationen hinsichtlich der ersten Position (107, 207, 307) enthalten, wobei die Verarbeitungsschaltung (109, 209, 309) dazu eingerichtet ist, das System (100, 200, 300) zu veranlassen:
- die ersten Positionsdaten zu erfassen;
- die zweiten Positionsdaten zu erfassen;
- die erste Position (107, 207, 307) auf Grundlage der ersten Positionsdaten zu bestimmen;
- die zweite Position (108, 208, 308) auf Grundlage der zweiten Positionsdaten zu bestimmen;
- einen Abstand und eine Richtung zwischen der ersten Position (107, 207, 307) und der zweiten Position (108, 208, 308) auf Grundlage der ersten und zweiten Position zu bestimmen;
- eine geometrische Form des ersten Werkzeugteils (103, 203, 303) zu bestimmen;
- eine geometrische Form des zweiten Werkzeugteils (104, 204, 304) zu bestimmen;
- eine Beziehung zwischen der ersten Position (107, 207, 307) und der geometrischen Form des ersten Werkzeugteils (103, 203, 303) zu bestimmen, wobei diese Information darüber enthält, wo an dem ersten Werkzeugteil (103, 203, 303) sich die erste Position (107, 207, 307) befindet;
- eine Beziehung zwischen der zweiten Position (108, 208, 308) und der geometrischen Form des zweiten Werkzeugteils (104, 204, 304) zu bestimmen, wobei diese Information darüber enthält, wo an dem zweiten Werkzeugteil (104, 204, 304) sich die zweite Position (108, 208, 308) befindet; und
- eine Einstellung des Schneidwerkzeugs (102, 202, 302) zumindest basierend auf
- dem bestimmten Abstand und der bestimmten Richtung zwischen der ersten Position (107, 207, 307) und der zweiten Position (108, 208, 308),
- der bestimmten Beziehung zwischen der ersten Position (107, 207, 307) und der geometrischen Form des ersten Werkzeugteils (103, 203, 303), und
- der bestimmten Beziehung zwischen der zweiten Position (108, 208, 308) und der geometrischen Form des zweiten Werkzeugteils (104, 204, 304) zu bestimmen.

2. System (100) nach Anspruch 1, wobei der erste Werkzeugteil (103) und der zweite Werkzeugteil (104) nicht austauschbare Werkzeugteile sind, wobei das Schneidwerkzeug (102) einen Identifikationsmarker (114) umfasst, wobei der Identifikationsmarker (114) ein maschinenlesbarer Code ist, der Schneidwerkzeug-Identifikationsdaten umfasst, wobei das System (100) ferner ein Lesegerät (115) umfasst, das dazu eingerichtet ist, den Identifikationsmarker (114) zu lesen, wobei die Verarbeitungsschaltung (109) ferner dazu eingerichtet ist, das System (100) zu veranlassen:
- den Identifikationsmarker (114) mittels des Lesegeräts (115) zu lesen;
- die Schneidwerkzeug-Identifikationsdaten durch Dekodierung des maschinenlesbaren Codes zu bestimmen;
- eine Schneidwerkzeuginformation basierend auf den Schneidwerkzeug-Identifikationsdaten zu bestimmen, wobei die Schneidwerkzeuginformation Informationen umfasst hinsichtlich:
- der geometrischen Form des ersten Werkzeugteils (103),
- der geometrischen Form des zweiten Werkzeugteils (104),
- der Beziehung zwischen der ersten Position (107) und der geometrischen Form des ersten Werkzeugteils (103), und
- der Beziehung zwischen der zweiten Position (108) und der geometrischen Form des zweiten Werkzeugteils (104), wobei
die geometrische Form des ersten Werkzeugteils (103), die geometrische Form des zweiten Werkzeugteils (104), die Beziehung zwischen der ersten Position (107) und der geometrischen Form des ersten Werkzeugteils (103), und die Beziehung zwischen der zweiten Position (108) und der geometrischen Form des zweiten Werkzeugteils (104) basierend auf der Schneidwerkzeuginformation bestimmt werden.

3. System (200) nach Anspruch 1, wobei der erste Werkzeugteil (203) einen ersten Identifikationsmarker (216) umfasst und der zweite Werkzeugteil (204) einen zweiten Identifikationsmarker (217) umfasst, wobei der erste Identifikationsmarker (216) ein erster maschinenlesbarer Code ist, der erste Werkzeugteil-Identifikationsdaten umfasst, und der zweite Identifikationsmarker (217) ein zweiter maschinenlesbarer Code ist, der zweite Werkzeugteil-Identifikationsdaten umfasst, wobei das System (200) ferner ein Lesegerät (215) umfasst, das dazu eingerichtet ist, die ersten und zweiten Identifikationsmarker (216, 217) zu lesen, wobei die Verarbeitungsschaltung (209) ferner dazu eingerichtet ist, das System (200) zu veranlassen:
- die ersten und zweiten Identifikationsmarker (216, 217) mittels des Lesegeräts (215) zu lesen;
- die ersten Werkzeugteil-Identifikationsdaten durch Dekodierung des ersten maschinenlesbaren Codes zu bestimmen;
- die zweiten Werkzeugteil-Identifikationsdaten durch Dekodierung des zweiten maschinenlesbaren Codes zu bestimmen;
- eine erste Werkzeugteilinformation basierend auf den ersten Werkzeugteil-Identifikationsdaten zu bestimmen, wobei die erste Werkzeugteilinformation Informationen umfasst hinsichtlich:
- der geometrischen Form des ersten Werkzeugteils (203), und
- der Beziehung zwischen der ersten Position (207) und der geometrischen Form des ersten Werkzeugteils (203);
- eine zweite Werkzeugteilinformation basierend auf den zweiten Werkzeugteil-Identifikationsdaten zu bestimmen, wobei die zweite Werkzeugteilinformation Informationen umfasst hinsichtlich:
- der geometrischen Form des zweiten Werkzeugteils (204), und
- der Beziehung zwischen der zweiten Position (208) und der geometrischen Form des zweiten Werkzeugteils (204); wobei
die geometrische Form des ersten Werkzeugteils (203) und die Beziehung zwischen der ersten Position (207) und der geometrischen Form des ersten Werkzeugteils (203) basierend auf der ersten Werkzeugteilinformation bestimmt werden, und die geometrische Form des zweiten Werkzeugteils (204) und die Beziehung zwischen der zweiten Position (208) und der geometrischen Form des zweiten Werkzeugteils (204) basierend auf der zweiten Werkzeugteilinformation bestimmt werden.

4. System (300) nach Anspruch 1, wobei das System (300) ferner eine Bildaufnahmeeinrichtung (318) umfasst, wobei die Verarbeitungsschaltung (309) ferner dazu eingerichtet ist, das System (300) zu veranlassen:
- ein Bild des ersten Werkzeugteils (303) mit darauf angeordnetem ersten Positionssensor (305) mittels der Bildaufnahmeeinrichtung (318) aufzunehmen;
- ein Bild des zweiten Werkzeugteils (304) mit darauf angeordnetem zweiten Positionssensor (306) mittels der Bildaufnahmeeinrichtung (318) aufzunehmen; wobei
- die geometrische Form des ersten Werkzeugteils (303) und die Beziehung zwischen der ersten Position (307) und der geometrischen Form des ersten Werkzeugteils (303) durch Bildanalyse des aufgenommenen Bilds des ersten Werkzeugteils (303) mit dem darauf angeordneten ersten Positionssensor (305) bestimmt werden; und
- die geometrische Form des zweiten Werkzeugteils (304) und die Beziehung zwischen der zweiten Position (308) und der geometrischen Form des zweiten Werkzeugteils (304) durch Bildanalyse des aufgenommenen Bilds des zweiten Werkzeugteils (304) mit dem darauf angeordneten zweiten Positionssensor (306) bestimmt werden.

5. System (200, 300) nach einem der vorhergehenden Ansprüche, wobei der zweite Werkzeugteil (204, 304) einen ersten Unterteil (210, 310) mit einer Längsachse B und einen zweiten Unterteil (211, 311) umfasst, wobei der zweite Unterteil (211, 311) radial und/oder axial relativ zum ersten Unterteil (210, 310) verstellbar ist, wobei sich die zweite Position (208, 308) am ersten Unterteil (210, 310) befindet, und wobei der zweite Unterteil (211, 311) einen dritten Positionssensor (212, 312) umfasst, der an einer dritten Position (219, 319) am zweiten Unterteil (211, 311) angeordnet ist, wobei der dritte Positionssensor (212, 312) dazu eingerichtet ist, dritte Positionsdaten zu erzeugen, die Informationen hinsichtlich der dritten Position (219, 319) enthalten, wobei die Verarbeitungsschaltung (209, 309) ferner dazu eingerichtet ist, das System (200, 300) zu veranlassen:
- die dritten Positionsdaten zu erfassen;
- die dritte Position (219, 319) auf Grundlage der dritten Positionsdaten zu bestimmen;
- einen Abstand und eine Richtung zwischen der ersten Position (207, 307) und der dritten Position (219, 319) auf Grundlage der ersten und dritten Position zu bestimmen und/oder einen Abstand und eine Richtung zwischen der zweiten Position (208, 308) und der dritten Position (219, 319) auf Grundlage der zweiten und dritten Position zu bestimmen;
- eine geometrische Form des ersten Unterteils (210, 310) zu bestimmen;
- eine geometrische Form des zweiten Unterteils (211, 311) zu bestimmen;
- eine Beziehung zwischen der zweiten Position (208, 308) und der geometrischen Form des ersten Unterteils (210, 310) zu bestimmen, wobei diese Information darüber enthält, wo am ersten Unterteil (210, 310) sich die zweite Position (208, 308) befindet;
- eine Beziehung zwischen der dritten Position (219, 319) und der geometrischen Form des zweiten Unterteils (211, 311) zu bestimmen, wobei diese Information darüber enthält, wo am zweiten Unterteil (211, 311) sich die dritte Position (219, 319) befindet; und
- eine Einstellung des Schneidwerkzeugs (202, 302) zumindest basierend auf
- der bestimmten Beziehung zwischen der ersten Position (207, 307) und der geometrischen Form des ersten Werkzeugteils (203, 303),
- der bestimmten Beziehung zwischen der zweiten Position (208, 308) und der geometrischen Form des ersten Unterteils (210, 310),
- der bestimmten Beziehung zwischen der dritten Position (219, 319) und der geometrischen Form des zweiten Unterteils (211, 311),
- dem bestimmten Abstand und der bestimmten Richtung zwischen der ersten Position (207, 307) und der zweiten Position (208, 308), und
- dem bestimmten Abstand und der bestimmten Richtung zwischen der ersten Position (207, 307) und der dritten Position (219, 319) und/oder zwischen der zweiten Position (208, 308) und der dritten Position (219, 319) zu bestimmen.

6. System (200, 300) nach Anspruch 5, wobei der erste Unterteil (210, 310) radial verstellbar relativ zum ersten Werkzeugteil (203, 303) ist, und wobei der zweite Unterteil (211, 311) axial verstellbar relativ zum ersten Werkzeugteil (203, 303) ist.

7. System (200) nach einem der vorhergehenden Ansprüche, wobei das System (200) ferner eine Schwingungsmessvorrichtung (213) umfasst, wobei die Schwingungsmessvorrichtung (213) dazu eingerichtet ist, Schwingungsdaten zu erzeugen, die Informationen hinsichtlich eines Schwingungsumfangs im Schneidwerkzeug (202) enthalten, wobei die Verarbeitungsschaltung (209) ferner dazu eingerichtet ist, das System (200) zu veranlassen:
- die Schwingungsdaten zu erfassen;
- den Schwingungsumfang im Schneidwerkzeug (202) basierend auf den Schwingungsdaten zu bestimmen;
- eine Beziehung zwischen dem bestimmten Schwingungsumfang im Schneidwerkzeug (202) und der bestimmten Einstellung des Schneidwerkzeugs (202) zu bestimmen.

8. System (100, 200, 300) nach einem der vorhergehenden Ansprüche, wobei das Schneidwerkzeug (102, 202, 302) ferner eine Verstelleinrichtung zum Verstellen des zweiten Werkzeugteils (104, 204, 304) relativ zum ersten Werkzeugteil (103, 203, 303) umfasst, und wobei das System (100, 200, 300) ferner eine Benutzerschnittstelle (121, 221, 321) umfasst, die dazu eingerichtet ist, eine angeforderte Einstellung des Schneidwerkzeugs (102, 202, 302) zu empfangen, und wobei das System (100, 200, 300) ferner eine Steuereinheit umfasst, wobei die Verarbeitungsschaltung (109, 209, 309) ferner dazu eingerichtet ist, das System zu veranlassen:
- eine angeforderte Einstellung über die Benutzerschnittstelle (121, 221, 321) zu erfassen;
- ein Steuersignal basierend auf der angeforderten Einstellung zu erzeugen; und
- die Verstelleinrichtung durch die Steuereinheit basierend auf dem erzeugten Steuersignal zu steuern.

9. Verfahren (400) zur Bestimmung einer Einstellung eines Schneidwerkzeugs (102, 202, 302), das einen ersten Werkzeugteil (103, 203, 303) mit einer Längsachse A und einen zweiten Werkzeugteil (104, 204, 304) umfasst, wobei der erste Werkzeugteil (103, 203, 303) ein nicht verstellbarer Werkzeugteil ist, und wobei der zweite Werkzeugteil (104, 204, 304) radial und/oder axial relativ zum ersten Werkzeugteil (103, 203, 303) verstellbar ist, wobei das Verfahren (400) **dadurch gekennzeichnet ist, dass** es die Schritte umfasst:
- Erfassen (401) erster Positionsdaten, die Informationen hinsichtlich einer ersten Position (107, 207, 307) am ersten Werkzeugteil (103, 203, 303) umfassen;
- Erfassen (402) zweiter Positionsdaten, die Informationen hinsichtlich einer zweiten Position (108, 208, 308) am zweiten Werkzeugteil (104, 204, 304) umfassen;
- Bestimmen (404) der ersten Position (107, 207, 307) basierend auf den ersten Positionsdaten;
- Bestimmen (405) der zweiten Position (108, 208, 308) basierend auf den zweiten Positionsdaten;
- Bestimmen (407) eines Abstands und einer Richtung zwischen der ersten Position (107, 207, 307) und der zweiten Position (108, 208, 308) basierend auf diesen Positionen;
- Bestimmen (419) einer geometrischen Form des ersten Werkzeugteils (103, 203, 303);
- Bestimmen (420) einer geometrischen Form des zweiten Werkzeugteils (104, 204, 304);
- Bestimmen (421) einer Beziehung zwischen der ersten Position (107, 207, 307) und der geometrischen Form des ersten Werkzeugteils (103, 203, 303), wobei diese Information darüber enthält, wo am ersten Werkzeugteil die erste Position liegt;
- Bestimmen (422) einer Beziehung zwischen der zweiten Position (108, 208, 308) und der geometrischen Form des zweiten Werkzeugteils (104, 204, 304), wobei diese Information darüber enthält, wo am zweiten Werkzeugteil die zweite Position liegt; und
- Bestimmen (427) einer Einstellung des Schneidwerkzeugs (102, 202, 302) zumindest basierend auf:
- dem bestimmten Abstand und der bestimmten Richtung zwischen der ersten Position (107, 207, 307) und zweiten Position (108, 208, 308),
- der bestimmten Beziehung zwischen der ersten Position (107, 207, 307) und der geometrischen Form des ersten Werkzeugteils (103, 203, 303), und
- der bestimmten Beziehung zwischen der zweiten Position (108, 208, 308) und der geometrischen Form des zweiten Werkzeugteils (104, 204, 304).

10. Verfahren nach Anspruch 9, wobei der erste Werkzeugteil (103) und der zweite Werkzeugteil (104) nicht austauschbare Werkzeugteile sind, wobei das Schneidwerkzeug (102) einen Identifikationsmarker (114) umfasst, wobei der Identifikationsmarker (114) ein maschinenlesbarer Code ist, der Schneidwerkzeug-Identifikationsdaten umfasst, wobei das Verfahren (400) ferner die Schritte umfasst:
- Lesen (409) des Identifikationsmarkers (114);
- Bestimmen (412) der Schneidwerkzeug-Identifikationsdaten durch Dekodierung des maschinenlesbaren Codes;
- Bestimmen (415) einer Schneidwerkzeuginformation basierend auf den Schneidwerkzeug-Identifikationsdaten, wobei die Schneidwerkzeuginformation Informationen umfasst hinsichtlich:
- der geometrischen Form des ersten Werkzeugteils (103),
- der geometrischen Form des zweiten Werkzeugteils (104),
- der Beziehung zwischen der ersten Position (107) und der geometrischen Form des ersten Werkzeugteils (103), und
- der Beziehung zwischen der zweiten Position (108) und der geometrischen Form des zweiten Werkzeugteils (104), wobei
die geometrische Form des ersten Werkzeugteils (103), die geometrische Form des zweiten Werkzeugteils (104), die Beziehung zwischen der ersten Position (107) und der geometrischen Form des ersten Werkzeugteils (103), und die die Beziehung zwischen der zweiten Position (108) und der geometrischen Form des zweiten Werkzeugteils (104) basierend auf der Schneidwerkzeuginformation bestimmt werden.

11. Verfahren (400) nach Anspruch 9, wobei der erste Werkzeugteil (203) einen ersten Identifikationsmarker (216) und der zweite Werkzeugteil (204) einen zweiten Identifikationsmarker (217) umfasst, wobei der erste Identifikationsmarker (216) ein erster maschinenlesbarer Code ist, der erste Werkzeugteil-Identifikationsdaten umfasst, und wobei der zweite Identifikationsmarker (217) ein zweiter maschinenlesbarer Code ist, der zweite Werkzeugteil-Identifikationsdaten umfasst, wobei das Verfahren (400) ferner die Schritte umfasst:
- Lesen (410) der ersten und zweiten Identifikationsmarker (216, 217);
- Bestimmen (413) der ersten Werkzeugteil-Identifikationsdaten durch Dekodierung des ersten maschinenlesbaren Codes;
- Bestimmen (416) der zweiten Werkzeugteil-Identifikationsdaten durch Dekodierung des zweiten maschinenlesbaren Codes;
- Bestimmen (417) einer ersten Werkzeugteilinformation basierend auf den ersten Werkzeugteil-Identifikationsdaten, wobei die erste Werkzeugteilinformation Information umfasst im Hinblick auf:
- die geometrische Form des ersten Werkzeugteils (203),
- die Beziehung zwischen der ersten Position (207) und der geometrischen Form des ersten Werkzeugteils (203);
- Bestimmen (418) einer zweiten Werkzeugteilinformation basierend auf den zweiten Werkzeugteil-Identifikationsdaten, wobei die zweite Werkzeugteilinformation Information umfasst im Hinblick auf:
- die geometrische Form des zweiten Werkzeugteils (204),
- die Beziehung zwischen der zweiten Position (208) und der geometrischen Form des zweiten Werkzeugteils (204); wobei
die geometrische Form des ersten Werkzeugteils (203), und die Beziehung zwischen der Ersten Position (207) und der geometrische Form des zweiten Werkzeugteils (203) basierend auf der ersten Werkzeugteilinformation bestimmt werden (419, 421); und wobei
die geometrische Form des zweiten Werkzeugteils (204), und die Beziehung zwischen der zweiten Position (208) und der geometrische Form des zweiten Werkzeugteils (204) basierend auf der zweiten Werkzeugteilinformation bestimmt werden (420, 422).

12. Verfahren (400) nach Anspruch 9, wobei der erste Werkzeugteil (303) einen ersten Positionssensor (305) an der ersten Position (307) und der zweite Werkzeugteil (304) einen zweiten Positionssensor (306) an der zweiten Position (308) umfasst, wobei das Verfahren ferner die Schritte umfasst:
- Aufnehmen (411) eines Bilds des ersten Werkzeugteils (303) mit dem darauf angeordneten ersten Positionssensor (305);
- Aufnehmen (414) eines Bilds des zweiten Werkzeugteils (304) mit dem darauf angeordneten zweiten Positionssensor (306); wobei
die geometrische Form des ersten Werkzeugteils (303), und die Beziehung zwischen der ersten Position (307) und der geometrischen Form des ersten Werkzeugteils (303) bestimmt (419, 421) werden durch Ausführen einer Bildanalyse des ausgenommenen Bilds des ersten Werkzeugteils (303) mit dem ersten Positionssensor (305) darauf angeordnet; und wobei
die geometrische Form des zweiten Werkzeugteils (304), und die Beziehung zwischen der zweiten Position (308) und der geometrischen Form des zweiten Werkzeugteils (304) bestimmt (420, 422) werden durch Ausführen einer Bildanalyse des aufgenommenen Bilds des zweiten Werkzeugteils (304) mit dem darauf angeordneten zweiten Positionssensor (306).

13. Verfahren (400) nach einem der Ansprüche 9-12, wobei der zweite Werkzeugteil (204, 304) einen ersten Unterteil (210, 310) mit Längsachse B und einen zweiten Unterteil (211, 311) umfasst, wobei der zweite Unterteil (211, 311) radial und/oder axial verstellbar relativ zum ersten Unterteil (210, 310) ist, wobei die zweite Position (208, 308) am ersten Unterteil (210, 310) liegt, wobei das Verfahren (400) ferner die Schritte umfasst:
- Erfassen (403) dritter Positionsdaten, die Information über eine dritte Position (219, 319) am zweiten Unterteil (211, 311) umfassen;
- Bestimmen (406) der dritten Position (219, 319) basierend auf den dritten Positionsdaten;
- Bestimmen (408) eines Abstands und einer Richtung zwischen der ersten Position (207, 307) und der dritten Position (219, 319) basierend auf der ersten Position (207, 307) und der dritten Position (219, 319), und/oder eines Abstands und einer Richtung zwischen der zweiten Position (208, 308) und der dritten Position (219, 319) basierend auf der zweiten Position (208, 308) und der dritten Position (219, 319);
- Bestimmen (423) einer geometrischen Form des ersten Unterteils (210, 310);
- Bestimmen (424) einer geometrischen Form des zweiten Unterteils (211, 311);
- Bestimmen (425) einer Beziehung zwischen der zweiten Position (208, 308) und der geometrischen Form des ersten Unterteils (210, 310), die Information umfasst im Hinblick darauf, wo an dem ersten Unterteil (210, 310) die zweite Position (208, 308) angeordnet ist;
- Bestimmen (426) einer Beziehung zwischen der dritten Position (219, 319) und der geometrischen Form des ersten Unterteils (211, 311), die Information umfasst im Hinblick darauf, wo an dem zweiten Unterteil (211, 311) die dritte Position (219, 319) angeordnet ist;
- Bestimmen (428) einer Einstellung des Schneidwerkzeugs (202, 302) basierend auf zumindest:
- der bestimmten Beziehung zwischen der ersten Position (207, 307) und der geometrischen Form des ersten Werkzeugteils (203, 303),
- der bestimmten Beziehung zwischen der zweiten Position (208, 308) und der geometrischen Form des ersten Unterteils (210, 310),
- der bestimmten Beziehung zwischen der dritten Position (219, 319) und der geometrischen Form des zweiten Unterteils (211, 311),
- dem bestimmten Abstand und der bestimmten Richtung zwischen der ersten Position (207, 307) und der zweiten Position (208, 308), und
- dem bestimmten Abstand und der bestimmten Richtung zwischen der ersten Position (207, 307) und der dritten Position (219, 319), und/oder dem bestimmten Abstand und der bestimmten Richtung zwischen der zweiten Position (208, 308) und der dritten Position (219, 319).

14. Verfahren nach einem der Ansprüche 9-13, wobei das Verfahren (400) ferner umfasst:
- Erfassen (429) von Vibrationsdaten, die Information betreffend eines Schwingungsumfangs des Schneidwerkzeugs (202) umfassen;
- Bestimmen (430) des Schwingungsumfangs des Schneidwerkzeugs (202) basierend auf den Vibrationsdaten; und
- Bestimmen (431) einer Beziehung zwischen dem bestimmten Schwingungsumfang in dem Schneidwerkzeug (202) und der bestimmten Einstellung des Schneidwerkzeugs (202).

15. Verfahren nach einem der Ansprüche 9-14, wobei das Werkzeug (102, 202, 302) darüber hinaus eine Verstelleinrichtung zur Einstellung des zweiten Werkzeugteils (104, 204, 304) relativ zu dem ersten Werkzeugteils (103, 203, 303) umfasst, wobei das Verfahren (400) ferner die Schritte umfasst:
- Erfassen (432) einer angeforderten Einstellung des Schneidwerkzeugs (102, 202, 302);
- Erzeugen (433) eines Steuersignals basierend auf der angeforderten Einstellung;
- Steuern (434) der Verstelleinrichtung basierend auf dem erzeugten Steuersignal.

16. Computerprogramm, das computerlesbare Codemittel umfasst, zum Ausführen in dem System (100, 200, 300) gemäß einem der Ansprüche 1-8, wobei das computerlesbare Codemittel bei Ausführung im System (100, 200, 300) das System (100, 200, 300) veranlasst, das Verfahren gemäß einem der Ansprüche 9-15 auszuführen.

17. Träger mit dem Computerprogramm nach Anspruch 16, wobei der Träger ein elektronisches Signal, ein optisches Signal, ein Funksignal oder ein computerlesbares Speichermedium ist.

## Revendications

1. Système (100, 200, 300) permettant de déterminer un paramètre d'un outil de coupe (102, 202, 302), où le système (100, 200, 300) comprend un outil de coupe (102, 202, 302) comprenant une première partie d'outil (103, 203, 303) présentant un axe longitudinal A et une deuxième partie d'outil (104, 204, 304), où la première partie d'outil (103, 203, 303) est une partie d'outil non réglable, et où la deuxième partie d'outil (104, 204, 304) est radialement et/ou axialement réglable par rapport à la première partie d'outil (103, 203, 303), où la deuxième partie d'outil (104, 204, 304) comprend un deuxième capteur de position (106, 206, 306) agencé au niveau d'une deuxième position (108, 208, 308) au niveau de la deuxième partie d'outil (104, 204, 304), et où le deuxième capteur de position (106, 206, 306) est configuré pour générer des deuxièmes données de position comprenant des informations concernant la deuxième position (108, 208, 308), où le système (100, 200, 300) comprend en outre un circuit de traitement (109, 209, 309), et une mémoire (120, 220, 320), où la mémoire (120, 220, 320) comprend des instructions exécutables par le circuit de traitement (109, 209, 309), **caractérisé en ce que** la première partie d'outil (103, 203, 303) comprend un premier capteur de position (105, 205, 305) agencé au niveau d'une première position (107, 207, 307) au niveau de la première partie d'outil (103, 203, 303), où le premier capteur de position (105, 205, 305) est configuré pour générer des premières données de position comprenant des informations concernant la première position (107, 207, 307), où le circuit de traitement (109, 209, 309) est configuré pour amener le système (100, 200, 300) à :
- obtenir les premières données de position ;
- obtenir les deuxièmes données de position ;
- déterminer la première position (107, 207, 307) sur la base des premières données de position ;
- déterminer la deuxième position (108, 208, 308) sur la base des deuxièmes données de position ;
- déterminer une distance et une direction entre la première position (107, 207, 307) et la deuxième position (108, 208, 308) sur la base de la première position (107, 207, 307) et de la deuxième position (108, 208, 308) ;
- déterminer une forme géométrique de la première partie d'outil (103, 203, 303) ;
- déterminer une forme géométrique de la deuxième partie d'outil (104, 204, 304) ;
- déterminer une relation entre la première position (107, 207, 307) et la forme géométrique de la première partie d'outil (103, 203, 303) qui comprend des informations concernant l'endroit sur la première partie d'outil (103, 203, 303) où la première position (107, 207, 307) se situe ;
- déterminer une relation entre la deuxième position (108, 208, 308) et la forme géométrique de la deuxième partie d'outil (104, 204, 304) qui comprend des informations concernant l'endroit sur la deuxième partie d'outil (104, 204, 304) où la deuxième position (108, 208, 308) se situe ; et
- déterminer un paramètre de l'outil de coupe (102, 202, 302) au moins sur la base :
- des distance et direction déterminées entre la première position (107, 207, 307) et la deuxième position (108, 208, 308),
- de la relation déterminée entre la première position (107, 207, 307) et la forme géométrique de la première partie d'outil (103, 203, 303), et
- de la relation déterminée entre la deuxième position (108, 208, 308) et la forme géométrique de la deuxième partie d'outil (104, 204, 304).

2. Système (100) selon la revendication 1, dans lequel la première partie d'outil (103) et la deuxième partie d'outil (104) sont des parties d'outil non échangeables, où l'outil de coupe (102) comprend un marqueur d'identification (114), où le marqueur d'identification (114) est un code lisible par machine comprenant des données d'identification d'outil de coupe, où le système (100) comprend en outre un dispositif de lecture (115) configuré pour lire le marqueur d'identification (114), où le circuit de traitement (109) est en outre configuré pour amener le système (100) à :
- lire, au moyen du dispositif de lecture (115), le marqueur d'identification (114) ;
- déterminer les données d'identification d'outil de coupe en décodant le code lisible par machine ;
- déterminer des informations d'outil de coupe sur la base des données d'identification d'outil de coupe, où les informations d'outil de coupe comprennent des informations concernant :
- la forme géométrique de la première partie d'outil (103),
- la forme géométrique de la deuxième partie d'outil (104),
- la relation entre la première position (107) et la forme géométrique de la première partie d'outil (103), et
- la relation entre la deuxième position (108) et la forme géométrique de la deuxième partie d'outil (104) ; où
la forme géométrique de la première partie d'outil (103), la forme géométrique de la deuxième partie d'outil (104), la relation entre la première position (107) et la forme géométrique de la première partie d'outil (103), et la relation entre la deuxième position (108) et la forme géométrique de la deuxième partie d'outil (104) sont déterminées sur la base des informations d'outil de coupe.

3. Système (200) selon la revendication 1, dans lequel la première partie d'outil (203) comprend un premier marqueur d'identification (216), et où la deuxième partie d'outil (204) comprend un deuxième marqueur d'identification (217), où le premier marqueur d'identification (216) est un premier code lisible par machine comprenant des premières données d'identification de partie d'outil, et où le deuxième marqueur d'identification (217) est un deuxième code lisible par machine comprenant des deuxièmes données d'identification de partie d'outil, où le système (200) comprend en outre un dispositif de lecture (215) configuré pour lire les premier et deuxième marqueurs d'identification (216, 217), où le circuit de traitement (209) est en outre configuré pour amener le système (200) à :
- lire, au moyen du dispositif de lecture (215), les premier et deuxième marqueurs d'identification (216, 217) ;
- déterminer les premières données d'identification de partie d'outil en décodant le premier code lisible par machine ;
- déterminer les deuxièmes données d'identification de partie d'outil en décodant le deuxième code lisible par machine ;
- déterminer des premières informations de partie d'outil sur la base des premières données d'identification de partie d'outil, où les premières informations de partie d'outil comprennent des informations concernant :
- la forme géométrique de la première partie d'outil (203), et
- la relation entre la première position (207) et la forme géométrique de la première partie d'outil (203) ;
- déterminer des deuxièmes informations de partie d'outil sur la base des deuxièmes données d'identification de partie d'outil, où les deuxièmes informations de partie d'outil comprennent des informations concernant :
- la forme géométrique de la deuxième partie d'outil (204), et
- la relation entre la deuxième position (208) et la forme géométrique de la deuxième partie d'outil (204) ; où
la forme géométrique de la première partie d'outil (203), et la relation entre la première position (207) et la forme géométrique de la première partie d'outil (203) sont déterminées sur la base des premières informations de partie d'outil ; et où
la forme géométrique de la deuxième partie d'outil (204), et la relation entre la deuxième position (208) et la forme géométrique de la deuxième partie d'outil (204) sont déterminées sur la base des deuxièmes informations de partie d'outil.

4. Système (300) selon la revendication 1, où le système (300) comprend en outre un dispositif d'imagerie (318), où le circuit de traitement (309) est en outre configuré pour amener le système (300) à :
- prendre une image, au moyen du dispositif d'imagerie (318), de la première partie d'outil (303) avec le premier capteur de position (305) agencé sur celle-ci ;
- prendre une image, au moyen du dispositif d'imagerie (318), de la deuxième partie d'outil (304) avec le deuxième capteur de position (306) agencé sur celle-ci ; où
la forme géométrique de la première partie d'outil (303), et la relation entre la première position (307) et la forme géométrique de la première partie d'outil (303) sont déterminées en effectuant une analyse d'image de l'image prise de la première partie d'outil (303) avec le premier capteur de position (305) agencé sur celle-ci ; et où
la forme géométrique de la deuxième partie d'outil (304), et la relation entre la deuxième position (308) et la forme géométrique de la deuxième partie d'outil (304) sont déterminées en effectuant une analyse d'image de l'image prise de la deuxième partie d'outil (304) avec le deuxième capteur de position (306) agencé sur celle-ci.

5. Système (200, 300) selon l'une quelconque des revendications précédentes, dans lequel la deuxième partie d'outil (204, 304) comprend une première sous-partie (210, 310) présentant un axe longitudinal B et une seconde sous-partie (211, 311), où la seconde sous-partie (211, 311) est radialement et/ou axialement réglable par rapport à la première sous-partie (210, 310), où la deuxième position (208, 308) est située au niveau de la première sous-partie (210, 310), et où la seconde sous-partie (211, 311) comprend un troisième capteur de position (212, 312) au niveau d'une troisième position (219, 319) au niveau de la seconde sous-partie (211, 311), où le troisième capteur de position (212, 312) est configuré pour générer des troisièmes données de position comprenant des informations concernant la troisième position (219, 319), où le circuit de traitement (209, 309) est en outre configuré pour amener le système (200, 300) à :
- obtenir les troisièmes données de position ;
- déterminer la troisième position (219, 319) sur la base des troisièmes données de position ;
- déterminer une distance et une direction entre la première position (207, 307) et la troisième position (219, 319) sur la base de la première position (207, 307) et de la troisième position (219, 319), et/ou une distance et une direction entre la deuxième position (208, 308) et la troisième position (219, 319) sur la base de la deuxième position (208, 308) et de la troisième position (219, 319) ;
- déterminer une forme géométrique de la première sous-partie (210, 310) ;
- déterminer une forme géométrique de la seconde sous-partie (211, 311) ;
- déterminer une relation entre la deuxième position (208, 308) et la forme géométrique de la première sous-partie (210, 310) qui comprend des informations concernant l'endroit sur la première sous-partie (210, 310) où la deuxième position (208, 308) se situe ;
- déterminer une relation entre la troisième position (219, 319) et la forme géométrique de la seconde sous-partie (211, 311) qui comprend des informations concernant l'endroit sur la seconde sous-partie (211, 311) où la troisième position (219, 319) se situe ; et
- déterminer un paramètre de l'outil de coupe (202, 302) au moins sur la base :
- de la relation déterminée entre la première position (207, 307) et la forme géométrique de la première partie d'outil (203, 303),
- de la relation déterminée entre la deuxième position (208, 308) et la forme géométrique de la première sous-partie (210, 310),
- de la relation déterminée entre la troisième position (219, 319) et la forme géométrique de la seconde sous-partie (211, 311),
- des distance et direction déterminées entre la première position (207, 307) et la deuxième position (208, 308), et
- des distance et direction déterminées entre la première position (207, 307) et la troisième position (219, 319) et/ou des distance et direction déterminées entre la deuxième position (208, 308) et la troisième position (219, 319).

6. Système (200, 300) selon la revendication 5, dans lequel la première sous-partie (210, 310) est radialement réglable par rapport à la première partie d'outil (203, 303), et où la seconde sous-partie (211, 311) est axialement réglable par rapport à la première partie d'outil (203, 303).

7. Système (200) selon l'une quelconque des revendications précédentes, où le système (200) comprend en outre un dispositif de mesure de vibrations (213), où le dispositif de mesure de vibrations (213) est configuré pour générer des données de vibrations comprenant des informations concernant une ampleur de vibrations dans l'outil de coupe (202), où le circuit de traitement (209) est en outre configuré pour amener le système (200) à :
- obtenir les données de vibrations ;
- déterminer l'ampleur de vibrations dans l'outil de coupe (202) sur la base des données de vibrations ;
- déterminer une relation entre l'ampleur déterminée de vibrations dans l'outil de coupe (202) et le paramètre déterminé de l'outil de coupe (202).

8. Système (100, 200, 300) selon l'une quelconque des revendications précédentes, dans lequel l'outil de coupe (102, 202, 302) comprend en outre un moyen de réglage destiné à régler la deuxième partie d'outil (104, 204, 304) par rapport à la première partie d'outil (103, 203, 303), et où le système (100, 200, 300) comprend en outre une interface utilisateur (121, 221, 321) configurée pour recevoir un paramètre demandé de l'outil de coupe (102, 202, 302), et où le système (100, 200, 300) comprend en outre une unité de commande, où le circuit de traitement (109, 209, 309) est en outre configuré pour amener le système à :
- obtenir un paramètre demandé via l'interface utilisateur (121, 221, 321) ;
- générer un signal de commande sur la base du paramètre demandé ; et
- commander, au moyen de l'unité de commande, le moyen de réglage sur la base du signal de commande généré.

9. Procédé (400) permettant de déterminer un paramètre d'un outil de coupe (102, 202, 302), comprenant une première partie d'outil (103, 203, 303) présentant un axe longitudinal A et une deuxième partie d'outil (104, 204, 304), où la première partie d'outil (103, 203, 303) est une partie d'outil non réglable, et où la deuxième partie d'outil (104, 204, 304) est radialement et/ou axialement réglable par rapport à la première partie d'outil (103, 203, 303), où le procédé (400) est **caractérisé par** les étapes consistant à :
- obtenir (401) des premières données de position comprenant des informations concernant une première position (107, 207, 307) au niveau de la première partie d'outil (103, 203, 303) ;
- obtenir (402) des deuxièmes données de position comprenant des informations concernant une deuxième position (108, 208, 308) au niveau de la deuxième partie d'outil (104, 204, 304) ;
- déterminer (404) la première position (107, 207, 307) sur la base des premières données de position ;
- déterminer (405) la deuxième position (108, 208, 308) sur la base des deuxièmes données de position ;
- déterminer (407) une distance et une direction entre la première position (107, 207, 307) et la deuxième position (108, 208, 308) sur la base de la première position (107, 207, 307) et de la deuxième position (108, 208, 308) ;
- déterminer (419) une forme géométrique de la première partie d'outil (103, 203, 303) ;
- déterminer (420) une forme géométrique de la deuxième partie d'outil (104, 204, 304) ;
- déterminer (421) une relation entre la première position (107, 207, 307) et la forme géométrique de la première partie d'outil (103, 203, 303) qui comprend des informations concernant l'endroit sur la première partie d'outil (103, 203, 303) où la première position (107, 207, 307) se situe ;
- déterminer (422) une relation entre la deuxième position (108, 208, 308) et la forme géométrique de la deuxième partie d'outil (104, 204, 304) qui comprend des informations concernant l'endroit sur la deuxième partie d'outil (104, 204, 304) où la deuxième position (108, 208, 308) se situe ; et
- déterminer (427) un paramètre de l'outil de coupe (102, 202, 302) au moins sur la base :
- des distance et direction déterminées entre la première position (107, 207, 307) et la deuxième position (108, 208, 308),
- de la relation déterminée entre la première position (107, 207, 307) et la forme géométrique de la première partie d'outil (103, 203, 303), et
- de la relation déterminée entre la deuxième position (108, 208, 308) et la forme géométrique de la deuxième partie d'outil (104, 204, 304).

10. Procédé selon la revendication 9, dans lequel la première partie d'outil (103) et la deuxième partie d'outil (104) sont des parties d'outil non échangeables, où l'outil de coupe (102) comprend un marqueur d'identification (114), où le marqueur d'identification (114) est un code lisible par machine comprenant des données d'identification d'outil de coupe, où le procédé (400) comprend en outre les étapes consistant à :
- lire (409) le marqueur d'identification (114) ;
- déterminer (412) les données d'identification d'outil de coupe en décodant le code lisible par machine ;
- déterminer (415) des informations d'outil de coupe sur la base des données d'identification d'outil de coupe, où les informations d'outil de coupe comprennent des informations concernant :
- la forme géométrique de la première partie d'outil (103),
- la forme géométrique de la deuxième partie d'outil (104),
- la relation entre la première position (107) et la forme géométrique de la première partie d'outil (103), et
- la relation entre la deuxième position (108) et la forme géométrique de la deuxième partie d'outil (104) ; où
la forme géométrique de la première partie d'outil (103), la forme géométrique de la deuxième partie d'outil (104), la relation entre la première position (107) et la forme géométrique de la première partie d'outil (103), et la relation entre la deuxième position (108) et la forme géométrique de la deuxième partie d'outil (104) sont déterminées (419, 420, 421, 422) sur la base des informations d'outil de coupe.

11. Procédé (400) selon la revendication 9, dans lequel la première partie d'outil (203) comprend un premier marqueur d'identification (216), et où la deuxième partie d'outil (204) comprend un deuxième marqueur d'identification (217), où le premier marqueur d'identification (216) est un premier code lisible par machine comprenant des premières données d'identification de partie d'outil, et où le deuxième marqueur d'identification (217) est un deuxième code lisible par machine comprenant des deuxièmes données d'identification de partie d'outil, où le procédé (400) comprend en outre les étapes consistant à :
- lire (410) les premier et deuxième marqueurs d'identification (216, 217) ;
- déterminer (413) les premières données d'identification de partie d'outil en décodant le premier code lisible par machine ;
- déterminer (416) les deuxièmes données d'identification de partie d'outil en décodant le deuxième code lisible par machine ;
- déterminer (417) des premières informations de partie d'outil sur la base des premières données d'identification de partie d'outil, où les premières informations de partie d'outil comprennent des informations concernant :
- la forme géométrique de la première partie d'outil (203), et
- la relation entre la première position (207) et la forme géométrique de la première partie d'outil (203) ;
- déterminer (418) des deuxièmes informations de partie d'outil sur la base des deuxièmes données d'identification de partie d'outil, où les deuxièmes informations de partie d'outil comprennent des informations concernant :
- la forme géométrique de la deuxième partie d'outil (204), et
- la relation entre la deuxième position (208) et la forme géométrique de la deuxième partie d'outil (204) ; où
la forme géométrique de la première partie d'outil (203), et la relation entre la première position (207) et la forme géométrique de la première partie d'outil (203) sont déterminées (419, 421) sur la base des premières informations de partie d'outil ; et où
la forme géométrique de la deuxième partie d'outil (204), et la relation entre la deuxième position (208) et la forme géométrique de la deuxième partie d'outil (204) sont déterminées (420, 422) sur la base des deuxièmes informations de partie d'outil.

12. Procédé (400) selon la revendication 9, dans lequel la première partie d'outil (303) comprend un premier capteur de position (305) agencé au niveau de la première position (307), et où la deuxième partie d'outil (304) comprend un deuxième capteur de position (306) agencé au niveau de la deuxième position (308), où le procédé (400) comprend en outre les étapes consistant à :
- prendre (411) une image de la première partie d'outil (303) avec le premier capteur de position (305) agencé sur celle-ci ;
- prendre (414) une image de la deuxième partie d'outil (304) avec le deuxième capteur de position (306) agencé sur celle-ci ; où
la forme géométrique de la première partie d'outil (303), et la relation entre la première position (307) et la forme géométrique de la première partie d'outil (303) sont déterminées (419, 421) en effectuant une analyse d'image de l'image prise de la première partie d'outil (303) avec le premier capteur de position (305) agencé sur celle-ci ; et où
la forme géométrique de la deuxième partie d'outil (304), et la relation entre la deuxième position (308) et la forme géométrique de la deuxième partie d'outil (304) sont déterminées (420, 422) en effectuant une analyse d'image de l'image prise de la deuxième partie d'outil (304) avec le deuxième capteur de position (306) agencé sur celle-ci.

13. Procédé (400) selon l'une quelconque des revendications 9 à 12, dans lequel la deuxième partie d'outil (204, 304) comprend une première sous-partie (210, 310) présentant un axe longitudinal B et une seconde sous-partie (211, 311), où la seconde sous-partie (211, 311) est radialement et/ou axialement réglable par rapport à la première sous-partie (210, 310), où la deuxième position (208, 308) est située au niveau de la première sous-partie (210, 310), où le procédé (400) comprend en outre les étapes consistant à :
- obtenir (403) des troisièmes données de position comprenant des informations concernant une troisième position (219, 319) au niveau de la seconde sous-partie (211, 311) ;
- déterminer (406) la troisième position (219, 319) sur la base des troisièmes données de position ;
- déterminer (408) une distance et une direction entre la première position (207, 307) et la troisième position (219, 319) sur la base de la première position (207, 307) et de la troisième position (219, 319), et/ou une distance et une direction entre la deuxième position (208, 308) et la troisième position (219, 319) sur la base de la deuxième position (208, 308) et de la troisième position (219, 319) ;
- déterminer (423) une forme géométrique de la première sous-partie (210, 310) ;
- déterminer (424) une forme géométrique de la seconde sous-partie (211, 311) ;
- déterminer (425) une relation entre la deuxième position (208, 308) et la forme géométrique de la première sous-partie (210, 310) qui comprend des informations concernant l'endroit sur la première sous-partie (210, 310) où la deuxième position (208, 308) se situe ;
- déterminer (426) une relation entre la troisième position (219, 319) et la forme géométrique de la seconde sous-partie (211, 311) qui comprend des informations concernant l'endroit sur la seconde sous-partie (211, 311) où la troisième position (219, 319) se situe ;
- déterminer (428) un paramètre de l'outil de coupe (202, 302) au moins sur la base :
- de la relation déterminée entre la première position (207, 307) et la forme géométrique de la première partie d'outil (203, 303),
- de la relation déterminée entre la deuxième position (208, 308) et la forme géométrique de la première sous-partie (210, 310),
- de la relation déterminée entre la troisième position (219, 319) et la forme géométrique de la seconde sous-partie (211, 311),
- des distance et direction déterminées entre la première position (207, 307) et la deuxième position (208, 308), et
- des distance et direction déterminées entre la première position (207, 307) et la troisième position (219, 319) et/ou des distance et direction déterminées entre la deuxième position (208, 308) et la troisième position (219, 319).

14. Procédé selon l'une quelconque des revendications 9 à 13, où le procédé (400) comprend en outre les étapes consistant à :
- obtenir (429) des données de vibrations comprenant des informations concernant une ampleur de vibrations dans l'outil de coupe (202) ;
- déterminer (430) l'ampleur de vibrations dans l'outil de coupe (202) sur la base des données de vibrations ; et
- déterminer (431) une relation entre l'ampleur déterminée de vibrations dans l'outil de coupe (202) et le paramètre déterminé de l'outil de coupe (202).

15. Procédé selon l'une quelconque des revendications 9 à 14, dans lequel l'outil de coupe (102, 202, 302) comprend en outre un moyen de réglage destiné à régler la deuxième partie d'outil (104, 204, 304) par rapport à la première partie d'outil (103, 203, 303), où le procédé (400) comprend en outre les étapes consistant à :
- obtenir (432) un paramètre demandé de l'outil de coupe (102, 202, 302) ;
- générer (433) un signal de commande sur la base du paramètre demandé ;
- commander (434) le moyen de réglage sur la base du signal de commande généré.

16. Programme informatique comprenant un moyen de code lisible par ordinateur devant être exécuté dans le système (100, 200, 300) selon l'une quelconque des revendications 1 à 8, lequel moyen de code lisible par ordinateur lorsqu'il est exécuté dans le système (100, 200, 300) amène le système (100, 200, 300) à réaliser le procédé selon l'une quelconque des revendications 9 à 15.

17. Support contenant le programme informatique selon la revendication 16, où le support est l'un d'un signal électronique, d'un signal optique, d'un signal radio ou d'un support de stockage lisible par ordinateur.
